# EUROPEAN PATENT APPLICATION

(11) **EP 4 730 320 A1**
(43) Date of publication of application: **22.04.2026**
(21) Application number: 24857891.6
(22) Date of filing: 29.05.2024
(51) Int. Cl.: G09G 5/393, G09G 3/36, G09G 3/20

(54) **REFRESH RATE SWITCHING METHOD AND ELECTRONIC DEVICE**

(30) Priority: 25.08.2023 CN 202311090673
(71) Applicant: Huawei Technologies Co., Ltd., Shenzhen, Guangdong 518129 (CN)
(72) Inventor: LI, Ming, Shenzhen, Guangdong 518129 (CN); ZHANG, Duanyang, Shenzhen, Guangdong 518129 (CN); DING, Mingfei, Shenzhen, Guangdong 518129 (CN); XIA, Ji, Shenzhen, Guangdong 518129 (CN); XIANG, Yu, Shenzhen, Guangdong 518129 (CN)
(74) Representative: Pfenning, Meinig & Partner mbB
(86) International application number: PCT/CN2024/096199
(87) International publication number: WO 2025/044346

(57) **Abstract**

A refresh rate switching method and an electronic device are provided, so that switching between refresh rates in different touch modes can be normally completed while ensuring normal sending-for-display of a screen. The electronic device supports a first touch mode and a second touch mode. The first touch mode supports a first refresh rate. The second touch mode supports a second refresh rate. If the electronic device detects a cross-mode refresh rate switching instruction, for example, detects a first refresh rate switching instruction that indicates to switch from the first refresh rate in the first touch mode to the second refresh rate in the second touch mode, the electronic device may forcibly control a graphics processing unit to perform layer composition of a to-be-displayed image, and control a display processor to perform cross-mode refresh rate switching. **In** this way, the electronic device can display, at the switched refresh rate, the to-be-displayed image composed by the graphics processing unit.

## Description

This application claims priority to Chinese Patent Application No. 202311090673.6, filed with the China National Intellectual Property Administration on August 25, 2023 and entitled "REFRESH RATE SWITCHING METHOD AND ELECTRONIC DEVICE", which is incorporated herein by reference in its entirety.

### TECHNICAL FIELD

Embodiments of this application relate to the field of terminal technologies, and in particular, to a refresh rate switching method and an electronic device.

### BACKGROUND

With improvement of display technologies, electronic devices such as mobile phones and tablet computers gradually start to support a plurality of screen refresh rates. A refresh rate (Refresh Rate or Scanning Frequency) is a quantity of times that images displayed on a screen of an electronic device are refreshed per second, expressed in a unit of hertz (Hz). The refresh rate may also be referred to as a display frequency or a display frame rate. For example, the refresh rate of the electronic device is 60 Hz. The electronic device can refresh and display image frames 60 times within 1 second (namely, 1000 milliseconds), that is, refresh and display one frame of image every 16.6 milliseconds. A higher refresh rate indicates a larger quantity of times that the electronic device can refresh and display image frames within 1 second, better stability of displayed images, smoother display, and less impact on eyes, but higher power consumption.

Currently, after the electronic device is wirelessly connected to a stylus, a user can operate a touchscreen of the electronic device through the stylus, to provide an input for the electronic device, so that the electronic device performs a corresponding operation based on the input. To ensure signal synchronization between the electronic device and the stylus, the electronic device needs to switch the refresh rate to a refresh rate that matches the stylus. However, in a current refresh rate switching process, a sending-for-display exception may occur.

### SUMMARY

This application provides a refresh rate switching method and an electronic device, so that the electronic device can normally complete switching between refresh rates in different touch modes, and ensure normal sending-for-display of a screen.

The following technical solutions are used in this application, to achieve the foregoing objectives.

According to a first aspect, a refresh rate switching method is provided, and may be applied to an electronic device. The electronic device supports a first touch mode and a second touch mode. The first touch mode supports a first refresh rate. The second touch mode supports a second refresh rate. The method includes: detecting a first refresh rate switching instruction when a screen refresh rate is the first refresh rate in the first touch mode, where the first refresh rate switching instruction indicates to switch from the first refresh rate in the first touch mode to the second refresh rate in the second touch mode; in response to the first refresh rate switching instruction, controlling a graphics processing unit to perform layer composition of a to-be-displayed image; controlling a display processor to switch the screen refresh rate from the first refresh rate in the first touch mode to the second refresh rate in the second touch mode; and displaying, at the second refresh rate in the second touch mode, the to-be-displayed image composed by the graphics processing unit.

A touch mode indicates a user input mode that can be supported by the electronic device. User input modes indicated by the first touch mode and the second touch mode differ. For example, the first touch mode supports stylus touch, and the second touch mode supports finger touch. Optionally, when there is a difference, there may also be an overlapping user input mode. For example, the first touch mode supports stylus touch, and the second touch mode supports finger touch and stylus touch. A user input mode indicated by each touch mode is not limited in this application.

Each touch mode corresponds to at least one refresh rate level that can be supported. Refresh rate levels supported in different touch modes may be different or may be the same. That refresh rate levels supported in different touch modes are different may be that the supported refresh rate levels are completely different, or may be that there is also an overlapping refresh rate level when there is a difference. For example, the first touch mode supports 30 Hz and 60 Hz, and the second touch mode supports 60 Hz, 120 Hz, and 144 Hz.

The display processor is generally responsible for layer composition and overlay of a to-be-sent-for-display image and refresh rate switching. The graphics processing unit is generally configured to: perform mathematical and geometric computation, and render an image.

According to the solution provided in the first aspect, when a screen of the electronic device is refreshed at the first refresh rate in the first touch mode, if a cross-mode refresh rate switching instruction is detected, for example, the first refresh rate switching instruction that indicates to switch from the first refresh rate in the first touch mode to the second refresh rate in the second touch mode is detected, the electronic device can forcibly assign, in response to the cross-mode refresh rate switching instruction, the graphics processing unit to perform layer composition of the to-be-sent-for-display image, thereby reducing a load of the display processor. The display processor can complete only cross-mode refresh rate switching, for example, complete switching from the first refresh rate in the first touch mode to the second refresh rate in the second touch mode. In this way, the electronic device can refresh and display, on the screen at the switched second refresh rate in the second touch mode, the image composed by the graphics processing unit. It may be understood that, for cross-mode refresh rate switching with a large difference, the display processor may not be able to complete layer composition and overlay of the to-be-sent-for-display image and refresh rate switching at the same time. As a result, a sending-for-display exception is likely to occur in a switching process. Therefore, in this solution, when switching between refresh rates in different touch modes needs to be performed, the graphics processing unit can be assigned to be responsible for layer composition of the to-be-sent-for-display image that the display processor is originally responsible for, thereby reducing the load of the display processor. The display processor can focus on switching the refresh rate. This ensures normal completion of cross-mode refresh rate switching, and also ensures normal sending-for-display of the to-be-displayed image. This avoids the sending-for-display exception in the cross-mode refresh rate switching process.

In a possible implementation, the first touch mode is a pen touch mode, and the second touch mode is a hand touch mode. The hand touch mode indicates that the electronic device supports a user to provide an input through a finger operation. The pen touch mode indicates that the electronic device supports the user to provide inputs through both the finger operation and a stylus operation.

In other words, when the screen of the electronic device is refreshed at the first refresh rate in the pen touch mode, if the first refresh rate switching instruction indicating that the second refresh rate in the hand touch mode is to be switched to is detected, the electronic device can forcibly assign, in response to the instruction, the graphics processing unit to perform layer composition of the to-be-sent-for-display image, thereby reducing the load of the display processor. The display processor can normally complete switching from the first refresh rate in the pen touch mode to the second refresh rate in the hand touch mode. In this way, the electronic device can normally refresh and display, on the screen at the normally switched second refresh rate in the hand touch mode, the image composed by the graphics processing unit.

In another possible implementation, the first touch mode is a hand touch mode, and the second touch mode is a pen touch mode.

In other words, when the screen of the electronic device is refreshed at the first refresh rate in the hand touch mode, if the first refresh rate switching instruction indicating that the second refresh rate in the pen touch mode is to be switched to is detected, the electronic device can forcibly assign, in response to the instruction, the graphics processing unit to perform layer composition of the to-be-sent-for-display image, thereby reducing the load of the display processor. The display processor can normally complete switching from the first refresh rate in the hand touch mode to the second refresh rate in the pen touch mode. In this way, the electronic device can normally refresh and display, on the screen at the normally switched second refresh rate in the pen touch mode, the image composed by the graphics processing unit.

In a possible implementation, the first refresh rate is the same as the second refresh rate. It may be understood that, although refresh rate levels in two touch modes are the same, due to a difference between the supported touch modes, display timings that are related to the refresh rates of the touch modes and that need to be adjusted also differ. For example, a difference between a display timing corresponding to 60 Hz in the hand touch mode and a display timing corresponding to 60 Hz in the pen touch mode (because a stylus input needs to be supported) is large. Therefore, in this solution, when switching to a same refresh rate between different touch modes needs to be performed, the graphics processing unit can be assigned to be responsible for layer composition of the to-be-sent-for-display image that the display processor is originally responsible for, thereby reducing the load of the display processor. The display processor can focus on switching to a same refresh rate between different touch modes.

In a possible implementation, the first refresh rate is different from the second refresh rate. To be specific, cross-mode refresh rate switching in this solution is related to switching between refresh rates in different touch modes, and is also related to switching between different refresh rate levels.

In a possible implementation, the first refresh rate is greater than the second refresh rate. In this case, in this solution, a high refresh rate in a touch mode can be switched to a low refresh rate in another touch mode. For example, 144 Hz in the hand touch mode is switched to 60 Hz in the pen touch mode.

In a possible implementation, the first refresh rate is greater than the second refresh rate. In this case, in this solution, a low refresh rate in a touch mode can be switched to a high refresh rate in another touch mode. For example, 60 Hz in the pen touch mode is switched to 144 Hz in the hand touch mode.

Optionally, when the first refresh rate is different from the second refresh rate, switching between refresh rates in different touch modes is related, and switching between different refresh rate levels is also related. Therefore, the electronic device can sequentially and separately complete switching between refresh rates in different touch modes and switching between different refresh rate levels.

In a possible implementation, when the first refresh rate is greater than the second refresh rate, a specific process of the refresh rate switching method provided in this solution may include: detecting the first refresh rate switching instruction when refreshing and displaying an N^{th} frame of image, where N is a positive integer; in response to the first refresh rate switching instruction, controlling the display processor to perform layer composition of the N^{th} frame of image, to obtain a to-be-displayed first image; controlling the display processor to switch the screen refresh rate from the first refresh rate in the first touch mode to a second refresh rate in the first touch mode; displaying, at the second refresh rate in the first touch mode, the first image composed by the display processor; when refreshing and displaying an (N+1)^{th} frame of image, in response to the first refresh rate switching instruction, controlling the graphics processing unit to perform layer composition of the (N+1)^{th} frame of image, to obtain a to-be-displayed second image; controlling the display processor to switch the screen refresh rate from the second refresh rate in the first touch mode to the second refresh rate in the second touch mode; and displaying, at the second refresh rate in the second touch mode, the second image composed by the graphics processing unit.

In this way, when the screen of the electronic device is refreshed at the first refresh rate in the first touch mode (for example, 144 Hz in the hand touch mode), if it is detected, when a frame of image (the N^{th} frame of image) is refreshed and displayed, that the second refresh rate in the second touch mode needs to be switched to, and the second refresh rate is less than the first refresh rate (for example, 60 Hz in the pen touch mode), the electronic device can first complete switching between different refresh rate levels (for example, switching from 144 Hz in the hand touch mode to 60 Hz in the hand touch mode) in a refresh and display process of the N^{th} frame of image, and then complete switching to a same refresh rate between different touch modes (for example, switching from 60 Hz in the hand touch mode to 60 Hz in the pen touch mode) in a refresh and display process of a next frame of image (the (N+1)^{th} frame of image). When the N^{th} frame of image is refreshed and displayed, because only a refresh rate level needs to be switched, a touch mode does not change. To be specific, switching between a high-refresh-rate level and a low-refresh-rate level in a same touch mode (the first touch mode) is completed, and cross-mode refresh rate switching is not related. A switching difference is small. Therefore, the display processor can still be responsible for layer composition of the N^{th} frame of image, and the graphics processing unit does not need to be assigned to be responsible for layer composition. However, when the (N+1)^{th} frame of image is refreshed and displayed, because switching to a same refresh rate between different touch modes needs to be completed, a switching difference is large. Therefore, the graphics processing unit needs to be assigned to be responsible for layer composition of the (N+1)^{th} frame of image, thereby reducing the load of the display processor. The display processor can focus on switching to a same refresh rate between different touch modes.

In a possible implementation, when the first refresh rate is less than the second refresh rate, a specific process of the refresh rate switching method provided in this solution may include: detecting the first refresh rate switching instruction when refreshing and displaying an N^{th} frame of image, where N is a positive integer; in response to the first refresh rate switching instruction, controlling the graphics processing unit to perform layer composition of the N^{th} frame of image, to obtain a to-be-displayed first image; controlling the display processor to switch the screen refresh rate from the first refresh rate in the first touch mode to a first refresh rate in the second touch mode; displaying, at the first refresh rate in the second touch mode, the first image composed by the graphics processing unit; when refreshing and displaying an (N+1)^{th} frame of image, in response to the first refresh rate switching instruction, controlling the display processor to perform layer composition of the (N+1)^{th} frame of image, to obtain a to-be-displayed second image; controlling the display processor to switch the screen refresh rate from the first refresh rate in the second touch mode to the second refresh rate in the second touch mode; and displaying, at the second refresh rate in the second touch mode, the second image composed by the display processor.

In this way, when the screen of the electronic device is refreshed at the first refresh rate in the first touch mode (for example, 60 Hz in the pen touch mode), if it is detected, when the N^{th} frame of image is refreshed and displayed, that the second refresh rate in the second touch mode needs to be switched to, and the second refresh rate is greater than the first refresh rate (for example, 144 Hz in the hand touch mode), the electronic device can first complete switching to a same refresh rate between different touch modes (for example, switching from 60 Hz in the pen touch mode to 60 Hz in the hand touch mode) in a refresh and display process of the N^{th} frame of image, and then complete switching between different refresh rate levels in a same touch mode (for example, switching from 60 Hz in the hand touch mode to 144 Hz in the hand touch mode) in a refresh and display process of a next frame of image (the (N+1)^{th} frame of image). When the N^{th} frame of image is refreshed and displayed, because switching to a same refresh rate between different touch modes is completed, cross-mode refresh rate switching is related, and a switching difference is large. Therefore, the graphics processing unit needs to be assigned to be responsible for layer composition of the N frame of image, thereby reducing the load of the display processor. The display processor can focus on switching to a same refresh rate between different touch modes. However, when the (N+1)^{th} frame of image is refreshed and displayed, because switching between different refresh rate levels in the same touch mode needs to be completed, cross-mode switching is not related, and a switching difference is small. Therefore, the display processor can still be responsible for layer composition of the (N+1)^{th} frame of image, and the graphics processing unit does not need to be assigned to be responsible for layer composition.

In some scenarios, with support of a hardware condition of the electronic device, the electronic device may alternatively directly complete switching from the first refresh rate in the first touch mode to the second refresh rate in the second touch mode when refreshing and displaying the N^{th} frame of image.

In a possible implementation, the refresh rate switching method provided in this solution may further include: determining a use status of a stylus; and generating the first refresh rate switching instruction in response to switching the use status from being unused to being used or switching the use status from being used to being unused. In this way, when the user needs to use the stylus, the electronic device can switch the refresh rate to a refresh rate supported in the pen touch mode. When the user does not need to use the stylus, the electronic device can switch the refresh rate to a refresh rate supported in the hand touch mode.

In a possible implementation, when determining the use status of the stylus, the stylus may send the use status to the electronic device, so that the electronic device can receive the use status sent by the stylus. In this way, the electronic device does not need to detect the use status of the stylus.

In a possible implementation, the electronic device may alternatively detect the use status of the stylus. For example, the electronic device may detect a connection status, an attachment status, and a full battery level status of the stylus, to determine the use status of the stylus based on the detected connection status, attachment status, and full battery level status.

Optionally, when the stylus is connected and attached to the electronic device, and a battery level of the stylus is not full, the electronic device may determine that the use status of the stylus is being used.

It may be understood that, if the user removes the stylus and immediately uses the stylus, because the stylus is still in an attachment charging state before being removed, the electronic device cannot detect a detachment event of the stylus in time through a timeout error packet (cep_timeout). As a result, the electronic device cannot immediately identify that the stylus is in use, and the user cannot immediately use the stylus normally after removing the stylus. Therefore, in this solution, determining of the full battery level status is added, so that the attachment charging state before the battery level of the stylus is not full is forcibly identified as that the stylus is in use. In this way, even if the user removes the stylus and immediately performs an input, the stylus can still be normally used.

Optionally, when the stylus is connected and attached to the electronic device, and the battery level of the stylus is full, the electronic device may determine that the use status of the stylus is being unused. It may be understood that, when the stylus is attached to the electronic device, and the battery level of the stylus is full, the electronic device can perceive a detachment event of the stylus in time in another manner. Therefore, the stylus may not be forcibly identified as being in use. It is simply determined, through attachment of the stylus on the electronic device, that the stylus is unused.

Optionally, when the stylus is connected but not attached to the electronic device, the electronic device may determine that the use status of the stylus is being used. It may be understood that, when the stylus connected to the electronic device is detached from the electronic device, the user uses the stylus quite possibly.

Optionally, when the stylus is not connected to the electronic device, the electronic device determines that the use status of the stylus is being unused. It may be understood that the stylus generally needs to be connected to the electronic device to perform a normal input. Therefore, if the stylus is not connected to the electronic device, it indicates that the user does not need to use the stylus currently.

In a possible implementation, the first touch mode is the hand touch mode, and the second touch mode is the pen touch mode. The electronic device may determine, as the second refresh rate in response to switching the use status from being unused to being used, a matched screen refresh rate from a plurality of refresh rates supported in the pen touch mode; and generate the first refresh rate switching instruction based on the second refresh rate in the pen touch mode.

In this way, when the user currently does not need to use the stylus, a current screen refresh rate of the electronic device matches the hand touch pen mode. However, when it is detected that a touch scenario changes, and the user currently needs to use the stylus, the electronic device switches the current screen refresh rate to match the pen touch mode. To be specific, an appropriate refresh rate can be matched from the plurality of optional refresh rates in the pen touch mode, and a cross-mode refresh rate switching instruction is correspondingly generated.

In a possible implementation, the first touch mode is the pen touch mode, and the second touch mode is the hand touch mode. The electronic device may determine, as the second refresh rate in response to switching the use status from being used to being unused, a matched screen refresh rate from a plurality of refresh rates supported in the hand touch mode; and generate the first refresh rate switching instruction based on the second refresh rate in the hand touch mode.

In this way, when the stylus needs to be used in a current scenario, a current screen refresh rate of the electronic device matches the pen touch pen mode. However, when it is detected that a touch scenario changes, and the user currently does not need to use the stylus, the electronic device can switch the current screen refresh rate to match the hand touch mode. To be specific, an appropriate refresh rate can be matched from the plurality of optional refresh rates in the hand touch mode, and a cross-mode refresh rate switching instruction is correspondingly generated.

In a possible implementation, the electronic device may also be preconfigured with a trustlist. The trustlist includes a touch mode corresponding to each application. For example, a game application may be forcibly configured to be in the hand touch mode, and an application for which the stylus needs to be used, for example, painting and note-taking, may be forcibly configured to be in the pen touch mode.

Therefore, when an application running in a foreground of the electronic device is not in the preset trustlist, the electronic device can directly switch the refresh rate based on a use scenario of the stylus. For example, the first refresh rate switching instruction is generated in response to switching the use status from being unused to being used or switching the use status from being used to being unused.

When the application running in the foreground of the electronic device is in the preset trustlist, the electronic device may preferably switch the refresh rate based on a touch mode configured in the preset trustlist. For example, the touch mode corresponding to the application running in the foreground is found from the preset trustlist. When the touch mode corresponding to the application running in the foreground changes, for example, is switched from the first touch mode to the second touch mode, the electronic device may generate the first refresh rate switching instruction in response to the change of the touch mode.

In an example, the electronic device may determine, as the second refresh rate in response to switching the touch mode corresponding to the application running in the foreground from the first touch mode to the second touch mode, a matched screen refresh rate from a plurality of refresh rates supported in the second touch mode; and generate the first refresh rate switching instruction based on the second refresh rate in the second touch mode. In this way, when it is identified, based on the touch mode configured in the trustlist, that the touch scenario changes, the current screen refresh rate can be switched to match a changed touch mode. To be specific, an appropriate refresh rate can be matched from the plurality of optional refresh rates in the second touch mode, and a cross-mode refresh rate switching instruction is correspondingly generated.

Similarly, when the touch mode corresponding to the application running in the foreground is switched from the second touch mode to the first touch mode, the electronic device may generate a second refresh rate switching instruction in response to the change of the touch mode, for example, switch from the second refresh rate in the second touch mode to the first refresh rate in the first touch mode. In this case, the electronic device may determine, as the first refresh rate, a matched screen refresh rate from a plurality of refresh rates supported in the first touch mode; and generate the second refresh rate switching instruction based on the first refresh rate in the first touch mode.

In some embodiments, due to the change of the touch scenario, in this solution, when the refresh rate is switched, an operating mode of touch firmware may also be switched. The touch firmware of the electronic device supports a first operating mode and a second operating mode. The first operating mode corresponds to the first touch mode. The second operating mode corresponds to the second touch mode. The refresh rate switching method provided in this solution further includes: in response to the first refresh rate switching instruction, switching the operating mode of the touch firmware from the first operating mode to the second operating mode. In this way, the screen refresh rate can match a current touch scenario (for example, the pen touch mode), and the operating mode of the touch firmware can also match the current touch scenario.

In some embodiments, the refresh rate switching method provided in this solution may further include: after the screen refresh rate is switched to the second refresh rate in the second touch mode, controlling the display processor to perform layer composition of the to-be-displayed image; and displaying, at the second refresh rate in the second touch mode, the to-be-displayed image composed by the display processor. In this way, after cross-mode refresh rate switching is completed, the original display processor can revert to being responsible for layer composition of the to-be-sent-for-display image. In addition, because refresh rate switching is completed, the display processor currently does not need to perform refresh rate switching, and is only responsible for layer composition of the to-be-sent-for-display image. Certainly, if a new refresh rate switching instruction is detected, the display processor still needs to perform refresh rate switching.

According to a second aspect, a refresh rate switching apparatus is provided. The apparatus is included in an electronic device. The apparatus has a function of implementing behavior of the electronic device in the method according to any one of the first aspect or the possible implementations of the first aspect. The function may be implemented by hardware, or may be implemented by hardware executing corresponding software. The hardware or the software includes one or more modules or units corresponding to the foregoing function. In an example, the refresh rate switching apparatus may include a processing module and a display module.

The processing module is configured to detect a first refresh rate switching instruction when a screen refresh rate is a first refresh rate in a first touch mode, where the first refresh rate switching instruction indicates to switch from the first refresh rate in the first touch mode to a second refresh rate in a second touch mode. The processing module is further configured to: in response to the first refresh rate switching instruction, control a graphics processing unit to perform layer composition of a to-be-displayed image. The processing module is further configured to control a display processor to switch the screen refresh rate from the first refresh rate in the first touch mode to the second refresh rate in the second touch mode. The display module is configured to displaying, at the second refresh rate in the second touch mode, the to-be-displayed image composed by the graphics processing unit.

In a possible implementation, the first touch mode is a pen touch mode, and the second touch mode is a hand touch mode. The hand touch mode indicates that the electronic device supports a user to provide an input through a finger operation. The pen touch mode indicates that the electronic device supports the user to provide inputs through both the finger operation and a stylus operation.

In a possible implementation, the first touch mode is a hand touch mode, and the second touch mode is a pen touch mode.

In a possible implementation, the first refresh rate is the same as the second refresh rate; or the first refresh rate is greater than the second refresh rate; or the first refresh rate is greater than the second refresh rate.

In a possible implementation, when the first refresh rate is greater than the second refresh rate, the processing module is configured to: detect the first refresh rate switching instruction when an N^{th} frame of image is refreshed and displayed, where N is a positive integer; in response to the first refresh rate switching instruction, control the display processor to perform layer composition of the N^{th} frame of image, to obtain a to-be-displayed first image; and control the display processor to switch the screen refresh rate from the first refresh rate in the first touch mode to a second refresh rate in the first touch mode. The display module is configured to display, at the second refresh rate in the first touch mode, the first image composed by the display processor. The processing module is further configured to: when an (N+1)^{th} frame of image is refreshed and displayed, in response to the first refresh rate switching instruction, control the graphics processing unit to perform layer composition of the (N+1)^{th} frame of image, to obtain a to-be-displayed second image; and control the display processor to switch the screen refresh rate from the second refresh rate in the first touch mode to the second refresh rate in the second touch mode. The display module is further configured to display, at the second refresh rate in the second touch mode, the second image composed by the graphics processing unit.

In a possible implementation, when the first refresh rate is less than the second refresh rate, the processing module is configured to: detect the first refresh rate switching instruction when an N^{th} frame of image is refreshed and displayed, where N is a positive integer; in response to the first refresh rate switching instruction, control the graphics processing unit to perform layer composition of the N^{th} frame of image, to obtain a to-be-displayed first image; and control the display processor to switch the screen refresh rate from the first refresh rate in the first touch mode to a first refresh rate in the second touch mode. The display module is configured to display, at the first refresh rate in the second touch mode, the first image composed by the graphics processing unit. The processing module is further configured to: when an (N+1)^{th} frame of image is refreshed and displayed, in response to the first refresh rate switching instruction, control the display processor to perform layer composition of the (N+1)^{th} frame of image, to obtain a to-be-displayed second image; and control the display processor to switch the screen refresh rate from the first refresh rate in the second touch mode to the second refresh rate in the second touch mode. The display module is further configured to display, at the second refresh rate in the second touch mode, the second image composed by the display processor.

In a possible implementation, the processing module is further configured to: determine a use status of a stylus; and generate the first refresh rate switching instruction in response to switching the use status from being unused to being used or switching the use status from being used to being unused.

In a possible implementation, the processing module is further configured to receive the use status of the stylus sent by the stylus.

In a possible implementation, the processing module is further configured to determine the use status of the stylus based on detected connection status, attachment status, and full battery level status of the stylus.

In a possible implementation, the processing module is further configured to: if it is detected that the stylus is connected and attached to the electronic device, and a battery level of the stylus is not full, determine that the use status of the stylus is being used; if it is detected that the stylus is connected and attached to the electronic device, and the battery level of the stylus is full, determine that the use status of the stylus is being unused; if it is detected that the stylus is connected but not attached to the electronic device, determine that the use status of the stylus is being used; or if it is detected that the stylus is not connected to the electronic device, determine that the use status of the stylus is being unused.

In a possible implementation, the first touch mode is a hand touch mode, and the second touch mode is a pen touch mode. The processing module is further configured to: determine, as the second refresh rate in response to switching the use status from being unused to being used, a matched screen refresh rate from a plurality of refresh rates supported in the pen touch mode; and generate the first refresh rate switching instruction based on the second refresh rate in the pen touch mode.

In a possible implementation, the first touch mode is a pen touch mode, and the second touch mode is a hand touch mode. The processing module is further configured to: determine, as the second refresh rate in response to switching the use status from being used to being unused, a matched screen refresh rate from a plurality of refresh rates supported in the hand touch mode; and generate the first refresh rate switching instruction based on the second refresh rate in the hand touch mode.

In a possible implementation, the processing module is further configured to: when a foreground application is not in a preset trustlist, generate the first refresh rate switching instruction in response to switching the use status from being unused to being used or switching the use status from being used to being unused.

In a possible implementation, the processing module is further configured to: match, from a preset trustlist when a foreground application is in the preset trustlist, a touch mode corresponding to the foreground application; and generate the first refresh rate switching instruction in response to switching the touch mode corresponding to the foreground application from the first touch mode to the second touch mode.

In a possible implementation, the processing module is further configured to: determine, as the second refresh rate in response to switching the touch mode corresponding to the foreground application from the first touch mode to the second touch mode, a matched screen refresh rate from a plurality of refresh rates supported in the second touch mode; and generate the first refresh rate switching instruction based on the second refresh rate in the second touch mode.

In a possible implementation, touch firmware of the electronic device supports a first operating mode and a second operating mode. The first operating mode corresponds to the first touch mode. The second operating mode corresponds to the second touch mode. The processing module is further configured to: in response to the first refresh rate switching instruction, switch an operating mode of the touch firmware from the first operating mode to the second operating mode.

In a possible implementation, the processing module is further configured to: after the screen refresh rate is switched to the second refresh rate in the second touch mode, control the display processor to perform layer composition of the to-be-displayed image; and display, at the second refresh rate in the second touch mode, the to-be-displayed image composed by the display processor.

According to a third aspect, an electronic device is provided, including one or more processors and one or more memories. The one or more memories are coupled to the one or more processors. The one or more memories are configured to store computer program code. The computer program code includes computer instructions. When the one or more processors execute the computer instructions, the electronic device is enabled to perform the refresh rate switching method according to any possible implementation of the first aspect.

According to a fourth aspect, a chip is provided. The chip is used in an electronic device. The chip includes one or more interface circuits and one or more processors. The interface circuit and the processor are interconnected through a line. The interface circuit is configured to: receive a signal from a memory of the electronic device and send the signal to the processor. The signal includes computer instructions stored in the memory. When the processor executes the computer instructions, the electronic device performs the refresh rate switching method according to any possible implementation of the first aspect.

According to a fifth aspect, an electronic device is provided. The electronic device includes a stylus. The electronic device performs the refresh rate switching method according to any possible implementation of the first aspect.

According to a sixth aspect, a computer storage medium is provided, including computer instructions. When the computer instructions are run on an electronic device, the electronic device is enabled to perform the refresh rate switching method according to any possible implementation of the first aspect.

According to a seventh aspect, a computer program product is provided. When the computer program product runs on a computer, an electronic device is enabled to perform the refresh rate switching method according to any possible implementation of the first aspect.

It may be understood that, for beneficial effect that can be achieved by the apparatus according to the second aspect, the electronic device according to the third aspect, the chip according to the fourth aspect, the electronic device according to the fifth aspect, the computer storage medium according to the sixth aspect, and the computer program product according to the seventh aspect, refer to beneficial effect in any one of the first aspect and the possible implementations of the first aspect. Details are not described herein again.

### BRIEF DESCRIPTION OF DRAWINGS

FIG. 1 is an abstract diagram of a display timing according to an embodiment of this application;
FIG. 2 is a waveform diagram of a display timing according to an embodiment of this application;
FIG. 3 is a diagram of a scenario according to an embodiment of this application;
FIG. 4 is a diagram of a hardware structure of an electronic device according to an embodiment of this application;
FIG. 5 is a diagram of a software structure of an electronic device according to an embodiment of this application;
FIG. 6 is a diagram of an event reporting path according to an embodiment of this application;
FIG. 7 is a diagram of another software structure of an electronic device according to an embodiment of this application;
FIG. 8 is a schematic flowchart of a refresh rate switching method according to an embodiment of this application;
FIG. 9 is a diagram 1 of module interaction according to an embodiment of this application;
FIG. 10 is a diagram 2 of module interaction according to an embodiment of this application;
FIG. 11 is a schematic flowchart of another refresh rate switching method according to an embodiment of this application;
FIG. 12 is a waveform diagram of switching a display timing according to an embodiment of this application;
FIG. 13 is another waveform diagram of switching a display timing according to an embodiment of this application;
FIG. 14 is a diagram 3 of module interaction according to an embodiment of this application;
FIG. 15 is a diagram 4 of module interaction according to an embodiment of this application;
FIG. 16 is a diagram 5 of module interaction according to an embodiment of this application;
FIG. 17 is a schematic flowchart of another refresh rate switching method according to an embodiment of this application; and
FIG. 18 is a diagram of a use scenario of a stylus according to an embodiment of this application.

### DESCRIPTION OF EMBODIMENTS

The following describes technical solutions in embodiments of this application with reference to accompanying drawings in embodiments of this application. The terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features. In descriptions of embodiments, unless otherwise specified, "a plurality of" means two or more.

With development of touch technologies, more electronic devices perform man-machine interaction in a touch mode. In addition to providing an input for the electronic device by operating a screen of the electronic device with a finger, a user may provide an input for the electronic device by operating the screen of the electronic device with a stylus, so that the electronic device can perform a corresponding operation based on the input.

In addition, with improvement of display technologies, the electronic device has been updated from supporting a fixed screen refresh rate like 30 Hz or 60 Hz in an early phase to supporting a plurality of levels of screen refresh rates nowadays, for example, supporting refresh rates such as 30 Hz, 60 Hz, 120 Hz, and 144 Hz, to optimize device power consumption and improve fluency of user experience.

However, due to a hardware limitation of the stylus, a touch mode of the stylus generally adapt to a refresh rate of 60 Hz of the electronic device, and cannot adapt to a high refresh rate (for example, 144 Hz). Therefore, at a refresh rate of 144 Hz, the electronic device supports only processing and responding to a finger input event, and does not support processing and responding to a stylus input event. That is, at the refresh rate of 144 Hz, the electronic device does not respond when the stylus taps the screen. Therefore, when a refresh rate of the electronic device is adjusted, it is necessary to consider a use scenario of the stylus.

However, a current electronic device generally simply switches from a low refresh rate to the high refresh rate, or switches from the high refresh rate to the low refresh rate, without considering a refresh rate limitation caused by different touch modes of the electronic device. Consequently, the electronic device supports processing and responding to both the finger input event and a stylus input event at different refresh rates. As a result, in some scenarios in which the stylus needs to be used for touch or writing, the screen does not support a stylus input due to blind switching to the high refresh rate, for example, 144 Hz, and the user is provided with an experience that the stylus cannot be used for touch or writing.

Therefore, when the user needs to use the stylus, the electronic device needs to switch the refresh rate to a refresh rate that matches the stylus. When the user does not need to use the stylus, the electronic device needs to switch the refresh rate to a refresh rate that matches the finger.

Because a difference between display timings at the refresh rate that matches the stylus and the refresh rate that matches the finger is excessively large, end-of-frame idle time is excessively short when the electronic device switches the refresh rate to the refresh rate that matches the stylus. Consequently, when the electronic device subsequently needs to switch the refresh rate to the refresh rate that matches the finger, a display exception like an artifact or a black screen of one frame of image occurs because the end-of-frame idle time is insufficient.

To resolve the foregoing problem, embodiments of this application provide a refresh rate switching method. An electronic device can normally switch, when a user needs to use a stylus, a refresh rate to a refresh rate that matches the stylus, and also normally switch, when the user does not need to use the stylus, the refresh rate to a refresh rate that matches the finger. In addition, normal refresh and display of a screen during switching can also be ensured, and a display exception like an artifact or a black screen can be avoided.

To facilitate distinguishing between processing and responding to a finger input event and processing and responding to a stylus input event, in embodiments of this application, touch scenarios supported by the screen of the electronic device are classified into two touch modes: a hand touch mode and a pen touch mode.

The hand touch mode indicates that the screen of the electronic device supports the user to provide an input for the electronic device through a finger operation, so that the electronic device can perform a corresponding operation based on the input finger operation. That is, the screen of the electronic device can process and respond to a finger input operation.

The pen touch mode indicates that the screen of the electronic device supports the user to provide an input for the electronic device through a stylus operation, and also supports the user to provide the input for the electronic device through the finger operation, so that the electronic device can perform a corresponding operation based on the input finger operation or stylus operation. That is, the screen of the electronic device can process and respond to a finger input operation, and can also process and respond to a stylus input operation.

In embodiments of this application, a refresh rate level supported in the hand touch mode is different from a refresh rate level supported in the pen touch mode. The refresh rate levels supported in the two touch modes may have an overlapping part, or may have a different part. For example, the pen touch mode supports a refresh rate of 60 Hz and does not support a refresh rate of 144 Hz, while the hand touch mode supports both the refresh rate of 60 Hz and the refresh rate of 144 Hz.

In some scenarios, for some electronic devices that do not support a high refresh rate, the refresh rate level supported in the hand touch mode may also be the same as the refresh rate level supported in the pen touch mode. For example, both the pen touch mode and the hand touch mode support a refresh rate of 30 Hz and the refresh rate of 60 Hz. Refresh rates respectively supported in the foregoing two touch modes are not limited in embodiments of this application.

In embodiments of this application, that the electronic device switches the refresh rate to the refresh rate that matches the stylus may be switching the refresh rate to the refresh rate level supported in the pen touch mode. This can ensure that the electronic device can support processing and responding to the stylus input event at a switched refresh rate, thereby ensuring user experience of using the stylus.

The screen of the electronic device may include a display panel (for example, a liquid crystal display (liquid crystal display, LCD)) and a touch panel (touch panel, TP). The display panel is configured to display an image, a video, and the like. The TP may be integrated into the display panel, and is configured to detect a touch operation performed on or near the TP. In some embodiments, the TP may alternatively be disposed on a surface of the electronic device at a location different from that of the display panel.

Optionally, switching of the refresh rate by the electronic device may include switching of a screen display configuration. This ensures that, when the refresh rate of the electronic device is switched to the refresh rate that matches the stylus, the display panel of the screen can perform normal display, thereby avoiding the display exception.

Switching of the screen display configuration by the electronic device may be switching of a display timing of the screen. The display timing may be a time sequence in which image data included in a frame of image is displayed on the display panel. Different refresh rates in a same touch mode correspond to different display timings. For example, in the hand touch mode, a display timing corresponding to the refresh rate of 60 Hz is different from a display timing corresponding to the refresh rate of 144 Hz. A same refresh rate between different touch modes also corresponds to different display timings. For example, the display timing corresponding to the refresh rate of 60 Hz in the hand touch mode is also different from a display timing corresponding to the refresh rate of 60 Hz in the pen touch mode. Certainly, different refresh rates in different touch modes also correspond to different display timings.

Optionally, switching of the refresh rate by the electronic device may also include switching of a screen touch configuration. This ensures that, when the refresh rate of the electronic device is switched to the refresh rate that matches the stylus, an operating status of the touch panel of the screen can also match the stylus, thereby avoiding a touch exception. In this way, the stylus or the finger of the user can perform an input normally.

Switching of the screen touch configuration by the electronic device may be switching of an operating mode of touch firmware of the screen. The touch firmware runs in the TP, and may be configured to: obtain a touch event and report the obtained touch event. The operating mode of the touch firmware may indicate a touch input type for which the TP supports detection (scanning). Optionally, the operating mode of the touch firmware may include a firmware mode 1 that supports both stylus input scanning and finger input scanning, and a firmware mode 2 that supports only finger input scanning.

It may be understood that, when needing to switch to the refresh rate level in the pen touch mode, the electronic device also needs to switch the operating mode of the touch firmware to the firmware mode 1 that supports stylus input scanning.

In other words, in embodiments of this application, due to a hardware limitation, screen display configurations and screen touch configurations of the electronic device may be different in different touch modes, and supported refresh rate levels, anti-interference capabilities, and power consumption may be different to some extent in different touch modes. For example, a refresh rate level of 144 Hz supports only the hand touch mode and does not support the pen touch mode. Even at a same refresh rate, a screen display configuration and a screen touch configuration of the hand touch mode are different from those of the pen touch mode.

It may be understood that, for the hand touch mode in which only a finger touch input is considered, because a stylus input does not need to be supported, it is not necessary to distinguish whether an input type is the stylus or the finger, and scanning for the stylus input does not need to be added either. In this way, compared with the screen display configuration and the screen touch configuration used in the pen touch mode, the screen display configuration and the screen touch configuration used in the hand touch mode have lower overall power consumption and stronger overall anti-interference capability.

Therefore, when switching the refresh rate to the refresh rate level supported in the pen touch mode, the electronic device needs to match the screen display configuration and the screen touch configuration in the pen touch mode, to switch the corresponding screen display configuration and screen touch configuration.

Optionally, if the refresh rate originally set by the electronic device is the refresh rate level supported in the hand touch mode, when the refresh rate level supported in the pen touch mode needs to be switched to, because the touch mode changes, the electronic device needs to switch both the screen display configuration and the screen touch configuration, to ensure that the display timing of the screen matches the refresh rate level supported in the pen touch mode, and the operating mode of the touch firmware of the screen matches the pen touch mode. This can ensure that, when the refresh rate of the electronic device is switched, the screen can normally perform display, and the stylus and the finger of the user can also normally perform inputs.

Optionally, if the refresh rate originally set by the electronic device is the refresh rate level supported in the pen touch mode, when another refresh rate level supported in the pen touch mode needs to be switched to, for example, the refresh rate of 60 Hz in the pen touch mode is switched to a refresh rate of 30 Hz in the pen touch mode, because the touch mode does not change, the operating mode of the touch firmware of the screen remains unchanged, and is still the firmware mode 1, and the electronic device may switch only the screen display configuration, to ensure that the display timing of the screen matches the another refresh rate level (30 Hz) supported in the pen touch mode.

Similarly, when switching the refresh rate back to the refresh rate level supported in the hand touch mode, the electronic device also needs to switch the screen display configuration and the screen touch configuration based on the corresponding touch mode.

Optionally, if the refresh rate originally set by the electronic device is the refresh rate level supported in the pen touch mode, when the refresh rate level supported in the hand touch mode needs to be switched to, because the touch mode changes, the electronic device needs to switch both the screen display configuration and the screen touch configuration, to ensure that the display timing of the screen matches the refresh rate level supported in the hand touch mode, and the operating mode of the touch firmware of the screen matches the hand touch mode.

Optionally, if the refresh rate originally set by the electronic device is the refresh rate level supported in the hand touch mode, when another refresh rate level supported in the hand touch mode needs to be switched to, for example, the refresh rate of 144 Hz in the hand touch mode is switched to the refresh rate of 60 Hz in the hand touch mode, because the touch mode does not change, the operating mode of the touch firmware of the screen remains unchanged, and is still the firmware mode 2, and the electronic device may switch only the screen display configuration, to ensure that the display timing of the screen matches the another refresh rate level (60 Hz) supported in the hand touch mode.

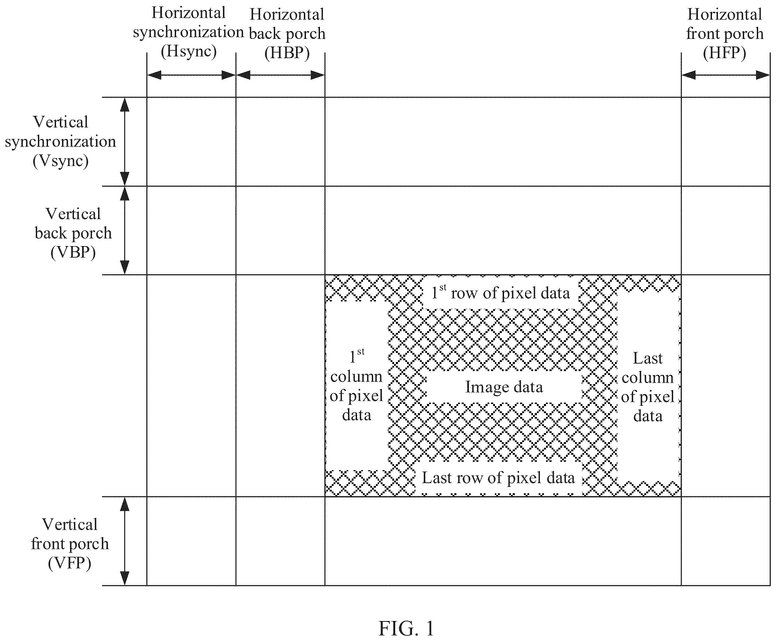

FIG. 1 is an abstract diagram of a display timing according to an embodiment of this application. The display timing may indicate a timing of transmitting image data, and may include a vertical timing and a horizontal timing.

In the vertical timing, vertical synchronization (vertical synchronization, Vsync) may indicate arrival of a new frame of image. Before Vsync, a vertical front porch (vertical front porch, VFP) is included, and after Vsync, a vertical back porch (vertical back porch, VBP) is included. Image data of a frame of image is between a VBP and a VFP that are adjacent to each other, and the image data is transmitted by a processor of the electronic device row by row to the display panel for display.

In the horizontal timing, horizontal synchronization (horizon synchronization, Hsync) may indicate arrival of a row of image data, and the row of image data includes a plurality of pixels. Before each Hsync, a horizontal front porch (horizon front porch, HFP) may be included, and after each Hsync, a horizontal back porch (horizon back porch, HBP) may be included. The row of image data is between an HBP and an HFP that are adjacent to each other.

It can be learned from FIG. 1 that, after image data of a previous frame of image is transmitted, a VFP first needs to elapse, and then a new frame of image starts to be transmitted. No image data is transmitted during the VFP. This period of time may be understood as end-of-frame idle time. When the new frame of image starts to be transmitted, because the VFP elapses before, in this case, Vsync may indicate that the new frame of image starts to be transmitted. Vsync may be a pulse signal. When Vsync ends and a VBP elapses, image data of the frame of image starts to be transmitted. Each row of image data may be transmitted through one horizontal timing. In addition, it can be learned from FIG. 1 that, no image data is transmitted during Vsync, the VFP, and the VBP, but image data is transmitted between the VFP and the VBP that are adjacent to each other. Therefore, time between the VFP and the VBP that are adjacent to each other is time required for transmitting one frame of image data, and may be referred to as effective sending-for-display time.

When image data of a frame of image starts to be transmitted, the image data of the frame of image may be transmitted to the display panel row by row for display. Similarly, when a row of image data starts to be transmitted, an HFP first elapses, and then Hsync indicates that the row of image data starts to be transmitted. Hsync may be a pulse signal. When Hsync ends and an HBP elapses, the row of image data starts to be transmitted. In addition, it can be learned from FIG. 1 that, no image data is transmitted during Hsync, the HFP, and the HBP, and image data is transmitted between the HBP and the HFP that are adjacent to each other. This period of time may be time required for transmitting one row of image data, and may be referred to as sending-for-display time per row.

Therefore, it can be learned that, in a process of displaying a frame of image, in addition to time for actually transmitting image data, time occupied by Vsync, the VFP, the VBP, Hsync, the HFP, and the HBP is included.

Currently, the electronic device generally implements switching between different refresh rates in the hand touch mode in an inter-frame touch driving (long vertical, Long-V) mode. Long-V can support unchanged effective sending-for-display time (time for transmitting one frame of image data) in the hand touch mode, and a refresh rate can be changed by changing a vertical front porch (vertical front porch, VFP) parameter in the display timing, namely, a length of the end-of-frame idle time. Long-V can support dynamic switching of a refresh rate ranging from 60 Hz to 120 Hz. Long-V is a touch driving mode of the screen, and means performing touch driving once again after one frame of image (a display phase) ends, to perform touch detection.

It may be understood that, when the effective sending-for-display time remains unchanged, time for displaying one frame of image may be prolonged by increasing specific end-of-frame idle time, so that a quantity of times of refreshing and displaying image frames per second is smaller, thereby reducing a screen refresh rate. On the contrary, the time for displaying the frame of image may be shortened by reducing specific end-of-frame idle time, so that the quantity of times of refreshing and displaying the image frames per second is larger, thereby increasing the screen refresh rate.

However, in the pen touch mode, the electronic device can support only display at a maximum refresh rate of 60 Hz, and needs to support scanning of the stylus. As a result, in the pen touch mode, the effective sending-for-display time changes greatly, and the end-of-frame idle time in the display timing is shortened. When the electronic device switches the refresh rate in this case, a display exception like an artifact or a black screen of one frame of image is likely to occur in sending-for-display during switching because the end-of-frame idle time in the display timing is insufficient.

For example, as shown in Table 1, this application provides display timings corresponding to different refresh rate levels in different touch modes.

**Table 1**

| Display timing of the screen | Display timing in the hand touch mode | | | Display timing in the pen touch mode |
|---|---|---|---|---|
| Refresh rate | 144 Hz | 120 Hz | 60 Hz | 60 Hz |
| Screen width | 720 | 720 | 720 | 720 |
| HBP | 20 | 20 | 20 | 318 |
| HFP | 19 | 19 | 19 | 20 |
| Hsync | 20 | 20 | 20 | 20 |
| Screen height | 2200 | 2200 | 2200 | 2200 |
| VBP | 86 | 86 | 86 | 86 |
| VFP | 15 | 26 | 2340 | 26 |
| Vsync | 2 | 2 | 2 | 2 |

It can be learned from Table 1 that, when the electronic device switches between display timings corresponding to refresh rates ranging from 60 Hz to 144 Hz in the hand touch mode, because scanning of the stylus input does not need to be supported, the effective sending-for-display time remains unchanged, the sending-for-display time per row remains unchanged, and timing parameters such as the HBP, the HFP, Hsync, Vsync, and the VBP remain unchanged (or change slightly). The electronic device may change the refresh rate by changing the VFP parameter in the display timing. For example, when the electronic device switches from the refresh rate of 120 Hz in the hand touch mode to the refresh rate of 60 Hz in the hand touch mode, the electronic device may increase the VFP from 26 to 2340, to complete switching of the display timing.

However, it can be learned from Table 1 that, when the electronic device switches from the refresh rate of 60 Hz in the hand touch mode to the refresh rate of 60 Hz in the pen touch mode, the effective sending-for-display time changes greatly because scanning of the stylus input needs to be supported. For example, the HBP in the display timing is increased from 20 to 318, and consequently, the sending-for-display time per row is increased. Because the electronic device needs to refresh and display one frame of image every 16.6 milliseconds (ms), when the effective sending-for-display time is increased, corresponding end-of-frame idle time is shortened.

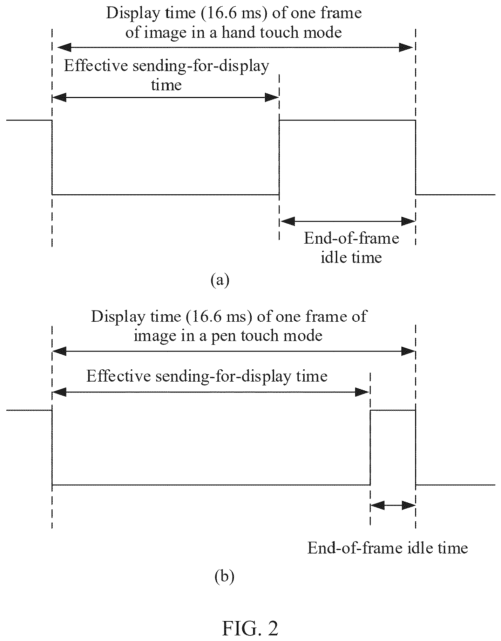

For example, (a) in FIG. 2 is a diagram of a display timing of refreshing and displaying one frame of image by the electronic device in the hand touch mode, and (b) in FIG. 2 is a diagram of a display timing of refreshing and displaying the frame of image by the electronic device in the pen touch mode. It can be learned from comparison between (a) and (b) in FIG. 2 that, although refresh rates in the two touch modes are both 60 Hz (that is, time for displaying the frame of image is 16.6 ms), required effective sending-for-display time in the pen touch mode is longer compared with that in the hand touch mode, and consequently, end-of-frame idle time is excessively short.

A display procedure of one frame of image may be divided into three phases: drawing and rendering, layer composition, and screen refresh and display. Therefore, displaying the frame of image originally needs to occupy a specific resource and specific time of the processor. If a display timing is switched, there needs to be sufficient end-of-frame idle time. Especially, for screens of some devices in which there is no image frame buffer (Frame buffer), for example, a screen that transmits image data in a video mode (video mode), each frame of image data needs to be transmitted by the processor to the display panel for display in real time based on a display timing at a refresh rate. Therefore, if end-of-frame idle time is excessively short, the electronic device cannot complete normal switching of the display timing and normal display of the image at the same time, and consequently, a display exception of a frame of image occurs during timing switching.

However, the refresh rate in the pen touch mode has a problem that end-of-frame idle time is excessively short. Therefore, when the electronic device switches from the refresh rate in the pen touch mode to the refresh rate in the hand touch mode, because the current end-of-frame idle time is excessively short, the electronic device cannot complete normal switching of a display timing and normal display of an image at the same time, and consequently, a display exception of a frame of image occurs during timing switching.

Therefore, embodiments of this application provide a refresh rate switching method. When detecting that switching between refresh rates in different touch modes needs to be performed for an N^{th} frame of image, an electronic device may forcibly change a layer composition manner of the N^{th} frame of image from composition by a display processor (mobile display processor, MDP) to composition by a graphics processing unit (GPU, Graphics Processing Unit), thereby reducing a load of the MDP. The MDP needs only to complete switching of a display timing within end-of-frame idle time. Therefore, when the end-of-frame idle time is insufficient, real-time switching of the display timing and image display can still be normally completed, thereby avoiding a display exception.

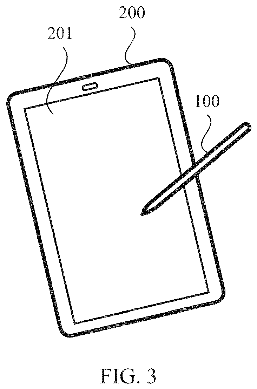

FIG. 3 is a diagram of a scenario to which an embodiment of this application is applicable. The scenario includes a stylus 100 and an electronic device 200. The stylus 100 may provide an input for the electronic device 200. The electronic device 200 performs, based on the input of the stylus 100, an operation in response to the input. In addition, a user may also provide an input for the electronic device 200 with a finger. The electronic device 200 performs, based on the input of the finger of the user, an operation in response to the input.

In this embodiment of this application, the electronic device 200 may be an electronic device like a mobile phone, a tablet computer, a wearable device like a smartwatch or a smart band, a smart home device like a television, a smart screen, a game console, a smart speaker, a smart projector, or a smart TV box, a vehicle-mounted device, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA). A specific device form of the electronic device 200 is not specially limited in embodiments of this application. In FIG. 3, an example in which the electronic device 200 is a tablet computer is used for description.

The electronic device 200 has a screen 201. The screen 201 may include a display panel and a touch panel TP. In some scenarios, the screen 201 including the TP and the display panel may also be referred to as a touchscreen or a touch screen.

The display panel is configured to display an image, a video, and the like. The display panel may be an LCD, an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like.

The TP may also be referred to as a touch sensor. The TP may be integrated into the display panel, and is configured to detect a touch operation performed on or near the TP, for example, detect a touch operation of the finger, or detect a touch operation of the stylus 100. In some embodiments, the TP may alternatively be disposed on a surface of the electronic device at a location different from that of the display panel.

The stylus 100 (which may also be referred to as a stylus pen) may be but is not limited to an inductive pen and a capacitive pen. The capacitive pen may include a passive capacitive pen and an active capacitive pen. The passive capacitive pen may be referred to as a passive capacitive pen, and the active capacitive pen may be referred to as an active capacitive pen.

Optionally, when the stylus 100 is an inductive pen, an electromagnetic induction plate may be integrated into the screen 201 of the electronic device 200 interacting with the stylus 100. A coil is distributed on the electromagnetic induction plate, and a coil is also integrated into the inductive pen. Based on an electromagnetic induction principle, in a range of a magnetic field generated by the electromagnetic induction plate, as the inductive pen moves, the inductive pen can accumulate electric energy. The inductive pen may transmit the accumulated electric energy to the electromagnetic induction plate through free oscillation through the coil in the inductive pen. The electromagnetic induction plate may scan the coil on the electromagnetic induction plate based on the electric energy from the inductive pen, and obtain a location of the inductive pen on the screen 201 through computation.

Optionally, one or more electrodes may be disposed in the active capacitive pen (for example, in a pen nib), and the active capacitive pen may transmit a signal through the electrode. When the stylus 100 is an active capacitive pen, an electrode array may be integrated into the screen 201 of the electronic device 200 interacting with the stylus 100. In an embodiment, the electrode array may be a capacitive electrode array. The electronic device 200 may receive a signal from the active capacitive pen through the electrode array, and then when receiving the signal, identify a location of the active capacitive pen on the screen 201 based on a change of a capacitance value on the screen 201.

In an embodiment, the stylus 100 and the electronic device 200 may be interconnected through a communication network, to implement wireless signal interaction. The communication network may be but is not limited to a short-range communication network like a Wi-Fi hotspot network, a Wi-Fi peer-to-peer (peer-to-peer, P2P) network, a Bluetooth network, a ZigBee network, or a near field communication (near field communication, NFC) network. Optionally, the stylus 100 may alternatively establish a wired connection to the electronic device 200 through a universal serial bus (universal serial bus, USB) interface. A specific communication mode between the stylus 100 and the electronic device 200 is not limited in embodiments of this application.

For example, a wireless connection is a Bluetooth connection. The stylus 100 and the electronic device 200 each may include a Bluetooth module integrated with a Bluetooth function, configured to perform communication in a Bluetooth transmission mode.

In a possible implementation, the Bluetooth module of the stylus 100 may be always on. Optionally, the stylus 100 may be further provided with a power supply switch. After a power is turned on, the Bluetooth module is supplied with power, and can be searched for and discovered by a surrounding device having a Bluetooth module. After a Bluetooth function is enabled, the electronic device 200 may find a surrounding Bluetooth device in a Bluetooth transmission distance range through the Bluetooth module of the electronic device 200. The surrounding Bluetooth device includes the stylus 100. Optionally, the user may tap on the electronic device 200 to view a Bluetooth device list, and then select an icon of the stylus 100, so that the electronic device 200 and the stylus 100 start to perform a Bluetooth pairing process, and establish the Bluetooth connection after pairing succeeds.

In another possible implementation, when the user attaches the stylus 100 to a side frame or the screen 201 of the electronic device 200, a Bluetooth pairing and/or a Bluetooth connection process between the stylus 100 and the electronic device 200 may alternatively be triggered.

Optionally, when the user does not need to use the stylus 100, or the stylus 100 is not in a paired state, or a remaining battery level of the stylus 100 is insufficient, the user may alternatively directly place the stylus 100 close to the electronic device 200, and attach the stylus 100 to a frame or a touchscreen 11 of the electronic device 200 through "strong magnetic attachment". For example, the stylus 100 may be attached to a long frame of the electronic device 200.

"Strong magnetic attachment" can ensure accommodation safety of the stylus 100. In some embodiments, "strong magnetic attachment" can trigger pairing and/or a connection between the stylus 100 and the electronic device 200. In some other embodiments, "strong magnetic attachment" can also complete a magnetic attachment charging process of the stylus 100. This is not limited in embodiments of this application.

In some scenarios, to facilitate accommodating the stylus 100, an accommodation compartment for accommodating the stylus 100 may also be disposed on the electronic device 200.

In some embodiments, the stylus 100 may further include a rechargeable battery. The stylus 100 may charge the rechargeable battery in a wireless charging manner.

Optionally, the stylus 100 may include a wireless charging coil, to receive a wireless charging input through the wireless charging coil. In a manner, the electronic device 200 may also include a wireless charging coil, to wirelessly charge the stylus through the wireless charging coil. The wireless charging coil of the stylus 100 may be coupled to the wireless charging coil of the electronic device 200, to wirelessly charge the rechargeable battery by inducing an alternating electromagnetic field generated by the wireless charging coil 350 of the electronic device 200.

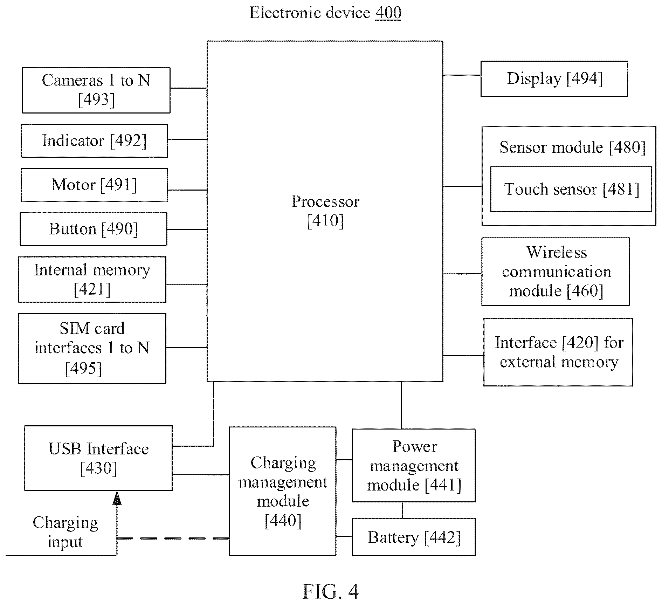

For example, FIG. 4 is a diagram of a structure of an electronic device 400 according to an embodiment of this application. The electronic device 400 may be the electronic device 200.

As shown in FIG. 4, the electronic device 400 may include a processor 410, an interface 420 for external memory, an internal memory 421, a universal serial bus (universal serial bus, USB) interface 430, a charging management module 440, a power management module 441, a battery 442, a wireless communication module 460, a sensor module 480, a button 490, a motor 491, an indicator 492, a camera 493, a display (screen) 494, a subscriber identification module (subscriber identification module, SIM) card interface 495, and the like. The sensor module 480 may include a touch sensor 481.

It may be understood that the structure shown in this embodiment does not constitute a specific limitation on the electronic device 400. In some other embodiments, the electronic device 400 may include more or fewer components than those shown in the figure, or a combination of a part of the components, or splits from a part of the components, or an arrangement of different components. The components shown in the figure may be implemented by hardware, software, or a combination of the software and the hardware.

The processor 410 may include one or more processing units. For example, the processor 410 may include an application processor (application processor, AP), a modem processor, a GPU, an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent devices, or may be integrated into one or more processors.

The controller may be a nerve center and a command center of the electronic device 100. The controller may generate an operation control signal based on an instruction operation code and a time sequence signal, to complete control of instruction fetching and instruction execution.

The memory may be further disposed in the processor 410, and is configured to store instructions and data. In some embodiments, the memory in the processor 410 is a cache. The memory may store instructions or data just used or cyclically used by the processor 410. If the processor 410 needs to use the instructions or the data again, the processor may directly invoke the instructions or the data from the memory. This avoids repeated access, and reduces waiting time of the processor 410, thereby improving system efficiency.

In some embodiments, the processor 410 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identification module (subscriber identity module, SIM) interface, a universal serial bus (universal serial bus, USB) interface, and/or the like.

The MIPI interface may be configured to connect the processor 410 to a peripheral device like the display 494. The MIPI interface includes a display pixel interface (display pixel interface, DPI). In this embodiment of this application, the processor 410 communicates with the display 494 through the DPI, to implement a display function of the electronic device 400. The DPI interface may be configured to send image data based on a display timing. The display timing may be an MIPI timing that complies with an MIPI protocol. The MIPI timing indicates a time sequence of sending image data of a frame of image, so that the display 494 receives the image data in an orderly manner and the display 494 is controlled to display the image.

It may be understood that an interface connection relationship between the modules shown in this embodiment is merely an example for description, and does not constitute a limitation on the structure of the electronic device 100. In some other embodiments, the electronic device 100 may alternatively use an interface connection manner different from that in the foregoing embodiment, or use a combination of a plurality of interface connection manners.

The charging management module 440 is configured to receive a charging input from a charger. The charger may be a wireless charger or a wired charger. In some embodiments of wired charging, the charging management module 440 may receive a charging input of a wired charger through the USB interface 430. In some embodiments of wireless charging, the charging management module 440 may receive a wireless charging input through a wireless charging coil of the electronic device 100. When charging the battery 442, the charging management module 440 may further supply power to the electronic device through the power management module 441.

In some embodiments, the electronic device 400 may support charging of a stylus. The charging management module 440 may receive an input of the battery 442, and convert a direct current signal input by the battery 442 into an alternating current signal. The alternating current signal is transmitted to the wireless charging coil through a matching circuit. The wireless charging coil receives the alternating current signal and may generate an alternating electromagnetic field. A wireless charging coil of the stylus induces the alternating electromagnetic field, and may perform wireless charging.

The power management module 441 is configured to connect to the battery 442, the charging management module 440, and the processor 410. The power management module 441 receives an input of the battery 442 and/or an input of the charging management module 440, to supply power to the processor 410, the internal memory 421, an external memory, the display 494, the camera 493, the wireless communication module 460, and the like. In some embodiments, the power management module 441 may alternatively be disposed in the processor 410. In some other embodiments, the power management module 441 and the charging management module 440 may alternatively be disposed in a same device.

A wireless communication function of the electronic device 100 may be implemented through an antenna, the wireless communication module 460, the modem processor, the baseband processor, and the like.

The wireless communication module 460 may provide a solution that is applied to the electronic device 400 and that includes wireless communication such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near-field communication, NFC), and an infrared (infrared, IR) technology. The wireless communication module 460 may be one or more devices integrating at least one communication processing module. The wireless communication module 460 receives an electromagnetic wave through an antenna 2, performs frequency modulation and filtering processing on an electromagnetic wave signal, and sends a processed signal to the processor 410. The wireless communication module 460 may further receive a to-be-sent signal from the processor 410, perform frequency modulation and amplification on the to-be-sent signal, and convert a processed signal into an electromagnetic wave for radiation through the antenna. In some embodiments, the wireless communication module 460 may include a Bluetooth module, configured to communicate with another device (for example, the stylus) through a Bluetooth communication technology.

In this embodiment of this application, the electronic device 100 implements the display function through the GPU, an MDP, the display 494, the application processor, and the like.

The GPU is a microprocessor for image processing, and is connected to the display 494 and the application processor. The GPU is configured to: perform mathematical and geometric computation, and render an image. In this embodiment of this application, the GPU may be configured to: compose and overlay a plurality of layers.

A layer composition and overlay manner includes two types: GPU composition and hardware composer (hardware composer, HWC) composition. When HWC composition is used, an HWC may implement layer composition and overlay through the hardware device MDP. The MDP is a dedicated display processor, and is mainly configured to: be responsible for hardware composition and overlay of the plurality of layers, and control the display timing (namely, the MIPI timing).

The display 494 is configured to display an image, a video, and the like. The display 494 may be the screen 201. The display 494 includes a display panel. The display panel may be an LCD, an OLED, an AMOLED, or the like. The display panel may be coupled to the processor 410 (for example, an AP or a system on chip (system on chip, SOC)) through the MIPI interface. In this way, the display panel may receive, through the MIPI interface, image data sent by the processor 410.

In this embodiment of this application, an example in which the display panel is an LCD is used. The display panel may include a display driver chip (display driver integrated circuit, DDIC). The DDIC is configured to: receive image data sent based on a display timing, and control the display panel to control a corresponding liquid crystal molecule based on each pixel in the display panel, so that the display panel displays the image data.

In this embodiment of this application, the display 494 may be a touchscreen. That is, the touch sensor 481 is integrated into the display 494. The touch sensor 481 may also be referred to as a "touch panel TP". In other words, the display 494 may include the display panel and a touch panel TP. Therefore, the display 494 may also be referred to as a "touchscreen".

The touch sensor 481 is configured to detect a touch operation performed on or near the touch sensor. After the touch sensor 481 detects the touch operation, a driver (for example, a TP driver) at a kernel layer may transfer the touch operation to an upper layer, to determine a touch event type. A visual output related to the touch operation may be provided through the display 494. In some other embodiments, the touch sensor 481 may alternatively be disposed on a surface of the electronic device 400 at a location different from that of the display 494.

Optionally, the display 494 may be configured to display information entered by the stylus. For example, the display 494 may be configured to display a motion track of the stylus. Optionally, the display 494 may also display, based on an input of the stylus, an interface related to the input of the stylus.

The interface 420 for external memory may be configured to connect to an external memory card, for example, a micro SD card, to extend a storage capability of the electronic device 100. The external memory card communicates with the processor 410 through the interface 420 for external memory, to implement a data storage function. For example, files such as music and a video are stored in the external memory card.

The internal memory 421 may be configured to store computer-executable program code, where the executable program code includes instructions. The processor 410 runs the instructions stored in the internal memory 421, to perform various function applications of the electronic device 100 and data processing. For example, in this embodiment of this application, the processor 410 may switch a refresh rate by executing the instructions stored in the internal memory 421. The internal memory 421 may include a program storage area and a data storage area. The program storage area may store an operating system, an application required by at least one function, and the like. The data storage area may store data created during use of the electronic device 100, and the like. In addition, the internal memory 421 may include a high-speed random access memory, and may further include a non-volatile memory, for example, at least one magnetic disk storage device, a flash memory device, or a universal flash storage (universal flash storage, UFS).

Methods in the following embodiments may be all implemented by the electronic device 400 having the foregoing hardware structure.

A software system of the electronic device 400 may use a layered architecture, an event-driven architecture, a microkernel architecture, a micro service architecture, or a cloud architecture. In embodiments of this application, an Android system with a layered architecture is used as an example to describe a software structure of the electronic device 400.

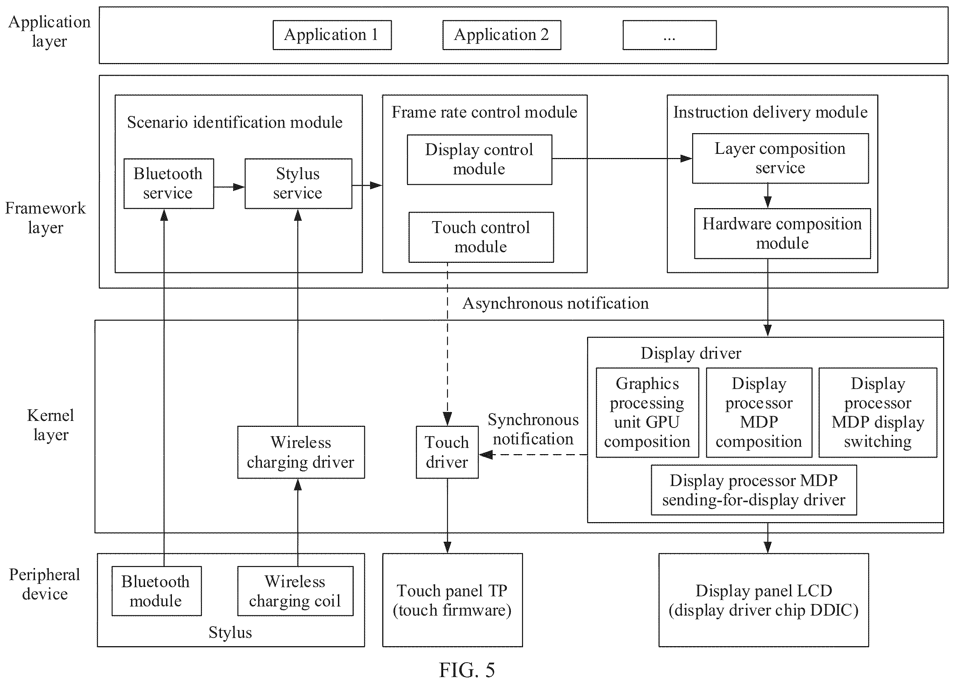

FIG. 5 is a block diagram of the software structure of the electronic device 400 according to an embodiment of this application. In the layered architecture, software may be divided into several layers. Each layer has a clear role and task. The layers communicate with each other through a software interface. In some embodiments, the Android system is divided into three layers: an application layer (referred to as an application layer for short), an application framework layer (referred to as a framework layer for short), and a kernel layer (also referred to as a driver layer) from top to bottom.

The application layer may include a series of application packages. As shown in FIG. 5, the application layer may include a plurality of application packages such as an application 1 and an application 2, for example, may include applications such as Camera, Drawing, Calendar, Game, Map, Navigation, Bluetooth, Music, Videos, Messaging, and Launcher (Launcher).

The framework layer provides an application programming interface (application programming interface, API) and a programming framework for an application at the application layer. The application framework layer includes some predefined functions. For example, the framework layer may include a window manager, an activity manager, a content provider, a view system, a phone manager, a resource manager, and a notification manager (not shown in the accompanying drawing).

In some embodiments, as shown in FIG. 5, the framework layer may further include a scenario identification module, a frame rate control module, an instruction delivery module, and the like.

The scenario identification module has a capability of sensing an external event, and can determine a current touch interaction scenario of the electronic device based on the sensed external event. In this embodiment of this application, the touch interaction scenario includes a touch scenario in which a stylus is used and a touch scenario in which a finger is used.

In this embodiment of this application, as shown in FIG. 5, the scenario identification module includes a stylus service module, used to determine, based on the sensed external event, whether the stylus is currently in a used state, that is, determine whether the electronic device is currently in the touch scenario in which the stylus is used.

Optionally, the framework layer may include a wireless communication service module, used to provide a capability of establishing a wireless communication connection to another device. The scenario identification module may detect, through the wireless communication service module, whether the electronic device establishes a wireless communication connection to another input device. In this way, it can be preliminarily determined whether the electronic device can be provided with an input by the another input device, to identify a current touch interaction scenario of the electronic device.

In an example, as shown in FIG. 5, the scenario identification module may include a Bluetooth service module, used to detect a connection event of the stylus, that is, whether the electronic device establishes a Bluetooth connection to the stylus. When it is detected that the electronic device does not establish the Bluetooth connection to the stylus, it may be considered that the stylus is unused currently. The stylus and the electronic device each may include a Bluetooth module, and the Bluetooth modules are used to establish the Bluetooth connection.

Optionally, when the electronic device establishes a communication connection to the stylus in another manner, the scenario identification module may also include another communication service. For example, when the electronic device is connected to the stylus through Wi-Fi, the scenario identification module may also include a Wi-Fi service module, used to detect whether the electronic device establishes a Wi-Fi connection to the stylus.

In this embodiment of this application, the scenario identification module may also detect a state event of the stylus through the API from a driver (for example, a wireless charging driver) at the kernel layer. The state event may be a charging event, a full-battery-level charging stop event, an attachment event, a detachment (non-attachment) event, or the like. In this way, the stylus service module may determine, based on the state event and the connection event of the stylus, whether the stylus is currently in the used state, that is, determine whether the electronic device is currently in the touch scenario in which the stylus is used.

After determining whether the stylus is currently in the used state, the stylus service module may send status information of the stylus to the frame rate control module, to determine a screen refresh rate suitable for a current touch scenario of the electronic device. The frame rate control module is used to control switching of a screen refresh rate.

As shown in FIG. 5, the frame rate control module includes a display control module, used to match, based on a detected use status of the stylus and a current screen refresh rate, a screen refresh rate level supported in the current touch scenario, to control the display panel of the display to switch to the screen refresh rate level corresponding to the touch scenario.

The touch scenario may be classified into a hand touch mode and a pen touch mode based on whether the stylus is in the used state. A screen refresh rate level supported in the hand touch mode may be different from a screen refresh rate level supported in the pen touch mode. Therefore, the frame rate control module needs to control screen refresh level switching based on the current touch scenario.

When it is identified that the current touch scenario changes, for example, is switched from the hand touch mode to the pen touch mode, the display control module needs to match a corresponding refresh rate, and also needs to match a corresponding touch mode, to control the display panel of the display to switch to a refresh rate supported in the corresponding touch mode. The refresh rate may be switched by controlling a display timing of the display panel. Different refresh rates in different touch modes correspond to different display timings.

After determining the screen refresh rate suitable for the current touch scenario, the display control module may send a refresh rate switching instruction to the instruction delivery module, to deliver the refresh rate switching instruction to a driver (for example, a display driver) at the kernel layer, so as to complete refresh rate switching.

In this embodiment of this application, the framework layer may include a layer composition service (SurfaceFlinger) and a hardware composer HWC.

The SurfaceFlinger is a special process, and is mainly responsible for fusion of all layers (Surfaces) in a frame of image. The SurfaceFlinger may obtain, through computation, a location of each surface in the frame of image based on parameters such as transparency, a size, and a location, then provide the location for the hardware composer or the GPU to generate a frame of image to be finally displayed. Then, the image is displayed on the display. In other words, display of the frame of image may be collaboratively completed by the SurfaceFlinger, the HW composer, the display, and the like.

The HWC is a module that performs layer composition and overlay, and display in the Android system, and provides hardware support for the SurfaceFlinger. That is, the HWC has a function or a capability of completing layer composition and overlay, and display through hardware.

The SurfaceFlinger provides all soft layer information for the HWC, and asks the HWC for a processing manner. In this embodiment of this application, the HWC may determine, based on whether the touch scenario changes, a layer composition manner, that is, whether hardware HWC composition or GPU composition is used. When the layer composition manner is HWC composition, the HWC may invoke the hardware device display processor MDP to perform layer composition and overlay. Then, the HWC may output data of the composed and overlaid image to the display for display. It should be noted that the SurfaceFlinger ends the current image composition task only after the composed and overlaid image is obtained through underlying MDP hardware.

In this embodiment of this application, the instruction delivery module may deliver the refresh rate switching instruction to the driver (for example, the display driver) at the kernel layer through the SurfaceFlinger and the HWC, to complete refresh rate switching.

A refresh rate switching process may include: After determining the screen refresh rate suitable for the current touch scenario, the display control module sends the refresh rate switching instruction to the SurfaceFlinger, the SurfaceFlinger delivers the refresh rate switching instruction to the HWC, the HWC delivers the refresh rate switching instruction to the display driver, after receiving the refresh rate switching instruction, the display driver notifies the display driver chip (for example, the DDIC) to switch to a target refresh rate, and the display driver chip drives the display panel (for example, the LCD) to complete switching of the screen refresh rate, to refresh and display the image at a new screen refresh rate.

In this embodiment of this application, in addition to switching the refresh rate of the display panel of the display, switching the screen refresh rate by the electronic device may include switching an operating mode of the touch panel of the display. An operating mode of touch firmware may include a firmware mode 1 that supports both stylus input scanning and finger input scanning, and a firmware mode 2 that supports only finger input scanning.

As shown in FIG. 5, the frame rate control module may further include a touch control module, used to match a corresponding operating mode of the touch firmware of the touch panel in the current touch scenario based on a detected use status of the stylus.

After determining the operating mode of the touch firmware suitable for the current touch scenario, the touch control module may notify a driver (for example, a touch driver) at the kernel layer to complete switching of the operating mode of the touch firmware.

Optionally, the display driver and the touch driver at the kernel layer may be notified synchronously to complete refresh rate switching and switching of a touch firmware mode. Synchronous notification may mean that, when the display driver is controlled at a kernel phase to complete refresh rate switching of the display panel, the touch driver is synchronously notified to complete switching of the operating mode of the touch firmware.

Optionally, the display driver and the touch driver at the kernel layer may alternatively be notified asynchronously to complete refresh rate switching and switching of the touch firmware mode. Asynchronous notification may mean that refresh rate switching of the display panel and switching of the operating mode of the touch firmware are triggered at the framework layer.

The kernel layer is a layer between hardware and software. The kernel layer is used to drive the hardware, so that the hardware works. The hardware of the electronic device may include the touch panel, the display panel, the wireless charging coil, and the like. A final function of the Android operating system is completed through the kernel layer.

In this embodiment of this application, the kernel layer includes at least the display driver, the touch driver, the wireless charging driver, and the like. This is not limited in embodiments of this application. In an embodiment, when the electronic device supports Bluetooth, the kernel layer of the electronic device may further include a Bluetooth driver.

The display driver may drive the display panel to work. The display panel may include the display driver chip (for example, the DDIC). The display driver is used to drive the DDIC to complete processing and implementation of image display on the display panel.

In this embodiment of this application, the display driver may also be used to drive the DDIC to complete switching of the screen refresh rate.

As shown in FIG. 5, the display driver may include a GPU composition module, an MDP composition module, an MDP display switching module, and an MDP sending-for-display driver. The display driver may control whether the GPU composition module completes layer overlay and composition or the MDP composition module completes layer overlay and composition. The MDP display switching module is used to control switching of the display timing of the display panel according to the delivered refresh rate switching instruction. The MDP sending-for-display driver is used to send image data to the DDIC based on the display timing, to drive the DDIC to display the image data.

For example, a user starts an application A. After the user starts the application A, the display displays an interface of the application A. Specifically, the application A sends a display parameter of the to-be-displayed interface to the SurfaceFlinger. The SurfaceFlinger is responsible for controlling fusion of all layers in the interface. The SurfaceFlinger sends display parameters (such as an internal memory address and a color) of the interface to the HWC through an interface for interface fusion. Generally, in image composition, the HWC obtains, by invoking the underlying hardware MDP, a composed image based on a display parameter of each interface. The HWC sends the image composed by the underlying hardware MDP to the display driver at the kernel layer. The display driver at the kernel layer sends the composed image to the display driver chip at the hardware layer. The display driver chip at the hardware layer sends the composed image to the display panel for display. In the foregoing manner, the display panel can complete a refresh and display procedure of a frame of image.

In this embodiment of this application, if switching between screen refresh rates in different touch modes need to be performed when an N^{th} frame of image is refreshed and displayed, the HWC may forcibly change a layer composition manner of the N^{th} frame of image to GPU composition, and deliver an instruction to a driver (for example, the display driver) in the kernel phase, to control the GPU composition module to implement layer composition of the N^{th} frame of image. In this way, an MDP load is reduced, and the MDP is responsible only for switching of the display timing of the display panel.

The touch driver may work through the touch panel TP. The touch panel runs the touch firmware. The touch driver may be used to drive the touch firmware to obtain a touch event, and report the obtained touch event.

In this embodiment of this application, the touch driver may also be used to drive the touch firmware to complete switching of the operating mode. The operating mode may include the firmware mode 1 and the firmware mode 2. In some embodiments, when it is detected that switching between refresh rates in different touch modes need to be performed, the touch control module may deliver an instruction to the driver (for example, the touch driver) in the kernel phase, to drive the touch firmware to complete switching of an operating mode.

The wireless charging driver (which may also be referred to as a wireless charging management module) is used to drive the wireless charging coil to work, to complete wireless charging of another device (for example, the stylus). In this embodiment of this application, the wireless charging driver may be used to report the state event of the stylus. The state event may be a full-battery-level charging stop event, the attachment event, the detachment (non-attachment) event, or the like.

For example, the electronic device wirelessly charges the stylus. The electronic device may control, through a wireless charging chip, the battery of the electronic device to output a current to the wireless charging coil of the electronic device. In this way, the wireless charging coil of the electronic device can transmit a high-frequency magnetic field. When the wireless charging coil of the stylus is paired with the wireless charging coil of the electronic device, the high-frequency magnetic field may enable the wireless charging coil of the stylus to generate an induced current. In this way, a wireless charging chip of the stylus can detect the induced current and input the induced current to a battery of the stylus.

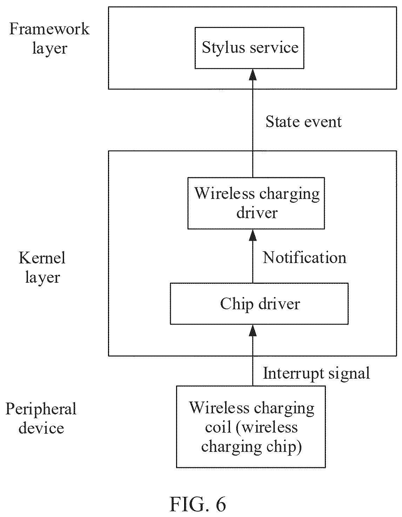

As shown in FIG. 6, when the wireless charging chip of the electronic device identifies, through the wireless charging coil, the state event like the attachment event (attachment to the electronic device from a detachment state), the full-battery-level charging stop event (full charging after attachment to the electronic device), or the detachment event (detachment from an attachment charging stop state) of the stylus, an interrupt (Interrupt) signal may be generated to trigger a chip driver at the kernel layer to process the interrupt procedure, and notify the wireless charging driver of the related event through the chip driver. The wireless charging driver further reports the related event to a stylus service, to finally implement identification of the use status of the stylus. In some scenarios, the wireless charging driver may also report the related state event to a Bluetooth service, and the Bluetooth service reports the state event and the connection event of the stylus to the stylus service.

Generally, the wireless charging chip is always in a low power (lowpower) Q scanning mode after power on or charging stop. In this case, the wireless charging chip periodically collects a Q value of the wireless charging coil. The Q value is a parameter that indicates wireless charging efficiency and capability transmission quality. When the stylus performs an attachment action on the electronic device from the detachment state, the wireless charging chip detects that the Q value of the wireless charging coil changes. In this case, the wireless charging chip may generate an interrupt (Interrupt) signal, to notify the wireless charging driver through an interrupt procedure of the chip driver, and the wireless charging driver reports the attachment event to the stylus service, or reports the attachment event to the Bluetooth service, and the Bluetooth service further reports the attachment event to the stylus service.

After the stylus is attached to the electronic device and is fully charged, the stylus is in the attachment charging stop state. In this case, when the stylus performs a detachment action from the attachment charging stop state, the wireless charging chip also detects that the Q value of the wireless charging coil changes. In this case, the wireless charging chip may generate an interrupt (Interrupt) signal, to notify the wireless charging driver through an interrupt procedure of the chip driver, and the wireless charging driver reports the detachment event during attachment charging stop to the stylus service, or reports the detachment event to the Bluetooth service, and the Bluetooth service further reports the detachment event to the stylus service.

It may be understood that both the attachment event and the detachment event of the stylus during attachment charging stop may be identified through Q scanning and reported in time. However, currently, a detachment event of the stylus during attachment charging is reported only when a timeout error packet (cep_timeout) is identified.

Currently, to ensure a smooth wireless charging process, a data packet needs to be transmitted between the stylus and the electronic device within specified time. The transmitted data packet may be a control error packet (control error packet, CEP). If the electronic device does not receive the data packet within the specified time, the electronic device may detect the timeout error packet (cep_timeout). In this case, the electronic device may consider that the stylus is detached. However, there is a delay (for example, 1.5s) in detection of cep_timeout. Therefore, the detachment event of the stylus during attachment charging cannot be reported in time by identifying cep_timeout. Consequently, when the user immediately uses the stylus, the electronic device cannot identify the use status of the stylus in time, and cannot switch the refresh rate or switch the touch firmware mode in time. As a result, a touch exception occurs, affecting user experience of the stylus.

To resolve the foregoing problem, in this embodiment of this application, a full-battery-level charging stop state is added to identify the use status of the stylus.

Specifically, after the stylus is attached to the electronic device and is fully charged, the stylus is in the attachment charging stop state. In this case, the stylus may notify the wireless charging coil of the electronic device of a charge done (charge done) event through a Qi protocol of the wireless charging coil. After the wireless charging coil of the electronic device receives the charge done event, the wireless charging chip of the electronic device may generate an interrupt (Interrupt) signal, to notify the wireless charging driver through an interrupt procedure of the chip driver, and the wireless charging driver reports the charge done event to the stylus service, or reports the charge done event to the Bluetooth service, and the Bluetooth service further reports the charge done event to the stylus service. In this way, the stylus service identifies the use status of the stylus based on the connection event, the attachment event, and a charging status, to determine whether the current touch scenario of the electronic device changes, thereby implementing intelligent switching of a corresponding refresh rate in different touch scenarios and the touch firmware mode.

It may be understood that structures of the framework layer and the kernel layer are not limited in embodiments of this application. The framework layer may include more service modules, and the kernel layer may include more driver processing modules.

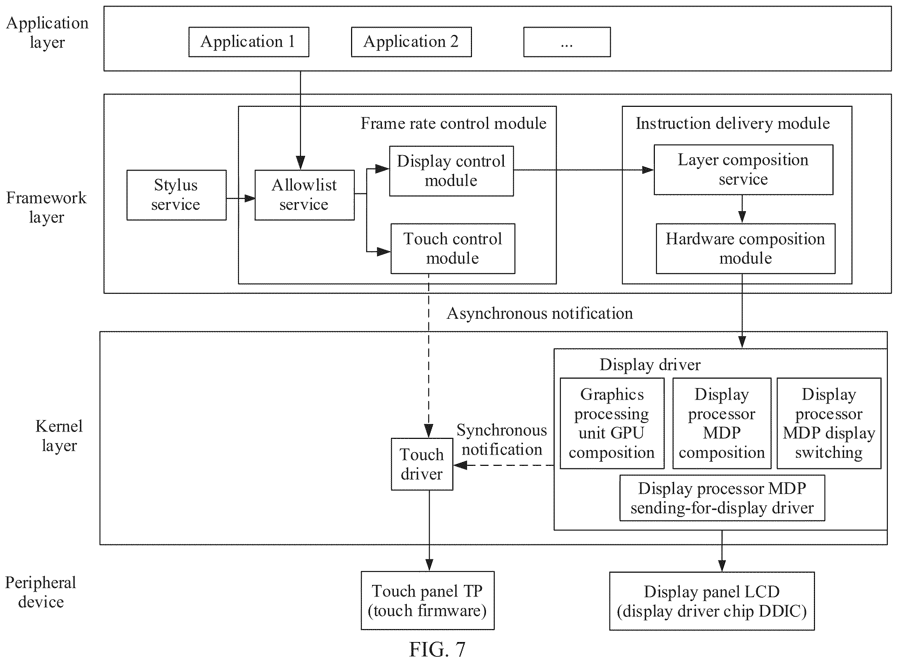

For example, as shown in FIG. 7, the framework layer may further include a trustlist service, used to configure a corresponding touch mode for some applications at the application layer. For example, for an application corresponding to some game scenarios, because the stylus does not need to be used, the touch scenario may be forcibly configured as the hand touch mode. For an application, for example, drawing or note taking, corresponding to some stylus use scenarios, the touch scenario may be forcibly configured to the pen touch mode.

Optionally, the trustlist service may store an application trustlist corresponding to the hand touch mode and an application trustlist corresponding to the pen touch mode.

As shown in FIG. 7, the trustlist service may be configured in the frame rate control module, so that the frame rate control module can comprehensively determine, based on the trustlist service and the stylus service, the screen refresh rate suitable for the current touch scenario of the electronic device.

In a manner, the frame rate control module may preferably determine, based on a touch scenario configured in the trustlist service, the screen refresh rate suitable for the current touch scenario of the electronic device. When no corresponding touch scenario is configured in the trustlist service, the screen refresh rate suitable for the current touch scenario of the electronic device is determined based on the status information of the stylus sent by the stylus service.

It may be understood that the software structure shown in this embodiment of this application does not constitute a specific limitation on the electronic device 100. In some other embodiments of this application, the electronic device 100 may include more or fewer layers than those shown in the figure, or each layer has more functional modules, or the functional modules are arranged at different layers. For example, the frame rate control module, the scenario identification module, and the instruction delivery module may be arranged at the application layer.

The methods in the following embodiments may be all implemented by the electronic device 400 having the foregoing software structure.

The following uses an electronic device as an example to describe in detail technical solutions provided in embodiments of this application.

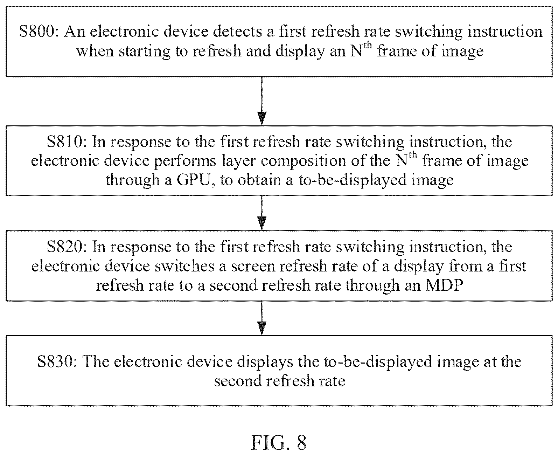

As shown in FIG. 8, a refresh rate switching method according to an embodiment of this application may include the following steps.

S800: The electronic device detects a first refresh rate switching instruction when starting to refresh and display an N^{th} frame of image.

The electronic device supports a hand touch mode and a pen touch mode. In the pen touch mode, the electronic device supports a first refresh rate. In the hand touch mode, the electronic device supports a second refresh rate. The first refresh rate may be the same as or different from the second refresh rate.

In some embodiments, the first refresh rate switching instruction may indicate to switch from the first refresh rate in the pen touch mode to the second refresh rate in the hand touch mode.

When detecting the first refresh rate switching instruction, the electronic device may determine that switching between refresh rates in different touch modes needs to be performed. When switching between refresh rates in different touch modes is performed, refresh rate switching is implemented by a display processor MDP. In a scenario in which the first refresh rate in the pen touch mode is switched to the second refresh rate in the hand touch mode, if the display processor MDP still performs layer composition of an image frame, an MDP load is excessively high, resulting in a sending-for-display exception of the image frame due to excessively short end-of-frame time. Therefore, in this embodiment of this application, a graphics processing unit GPU may be assigned to perform layer composition, to reduce the MDP load, and the MDP needs only to implement refresh rate switching.

In some embodiments, refresh and display of each frame of image may be triggered by a Vsync signal. When detecting a Vsync signal, the electronic device may determine to start to refresh and display a new frame of image. It may be understood that, if the electronic device detects the first refresh rate switching instruction when starting to refresh and display a new frame of image, for example, the N^{th} frame of image, the electronic device may perform the refresh rate switching method provided in this embodiment of this application.

Optionally, the electronic device may identify a current touch scenario, to match a refresh rate in a corresponding touch mode based on the identified touch scenario. If the matched refresh rate in the corresponding touch mode is different from a refresh rate in a touch mode currently used by the electronic device, the electronic device may trigger refresh rate switching. If triggered refresh rate switching is switching from a refresh rate supported in the pen touch mode to a refresh rate supported in the hand touch mode, it may be determined that the first refresh rate switching instruction is detected.

Optionally, each touch mode corresponds to one or more matched screen refresh rates. Screen refresh rate levels corresponding to the touch modes may be the same or different, or may be partially or completely different.

The matched screen refresh rates corresponding to the touch modes may be associated in advance through a correspondence table, so that the electronic device can match, based on the identified touch scenario and the preset correspondence table, a screen refresh rate suitable for the current touch scenario. The correspondence table may be prestored on the electronic device.

For example, as shown in Table 2, the hand touch mode (identified by a sequence number 1) corresponds to levels 1 to 4 of matched screen refresh rates, and the pen touch mode (identified by a sequence number 2) corresponds to a level 1 of a matched screen refresh rate.

**Table 2**

| Touch mode | Screen refresh rate |
|---|---|
| Hand touch mode-1 | 1-1 corresponds to a 30 Hz level |
| | 1-2 corresponds to a 60 Hz level |
| | 1-3 corresponds to a 120 Hz level |
| | 1-4 corresponds to a 144 Hz level |
| Pen touch mode-2 | 2-1 corresponds to a 60 Hz level |

In an example, the first refresh rate switching instruction may indicate to switch from the 60 Hz level (identified by the sequence number 2-1) in the pen touch mode to the 60 Hz level (identified by the sequence number 1-2) in the hand touch mode.

In another example, the first refresh rate switching instruction may alternatively indicate to switch from the 60 Hz level (identified by the sequence number 2-1) in the pen touch mode to the 144 Hz level (identified by the sequence number 1-4) in the hand touch mode.

In some other embodiments, the first refresh rate switching instruction may alternatively indicate to switch from the second refresh rate in the hand touch mode to the first refresh rate in the pen touch mode. For example, the first refresh rate switching instruction may indicate to switch from the 60 Hz level (identified by the sequence number 1-2) in the hand touch mode to the 60 Hz level (identified by the sequence number 2-1) in the pen touch mode. For another example, the first refresh rate switching instruction may alternatively indicate to switch from the 144 Hz level (identified by the sequence number 1-4) in the hand touch mode to the 60 Hz level (identified by the sequence number 2-1) in the pen touch mode.

Optionally, the electronic device may identify the current touch scenario, to match the refresh rate in the corresponding touch mode based on the identified touch scenario. If the matched refresh rate in the corresponding touch mode is different from the refresh rate in the touch mode currently used by the electronic device, the electronic device may trigger refresh rate switching. If triggered refresh rate switching is switching from the refresh rate supported in the hand touch mode to the refresh rate supported in the pen touch mode, it may be determined that the first refresh rate switching instruction is detected.

In some embodiments, the electronic device may identify the current touch scenario based on whether a stylus is in a used state.

In some embodiments, the electronic device may alternatively identify the current touch scenario based on a touch scenario configured in an application trustlist.

In some embodiments, the electronic device may alternatively identify the current touch scenario by comprehensively considering whether the stylus is in the used state and the touch scenario configured in the application trustlist. A manner in which the electronic device identifies the current touch scenario is not limited in embodiments of this application.

In some embodiments, when triggering refresh rate switching, the electronic device may also trigger switching of an operating mode of touch firmware.

Optionally, the electronic device may identify the current touch scenario, to match an operating mode of the touch firmware in the corresponding touch mode based on the identified touch scenario. If the matched operating mode of the touch firmware in the corresponding touch mode is different from an operating mode currently used by the touch firmware of the electronic device, the electronic device may trigger switching of the operating mode of the touch firmware.

Optionally, each touch mode corresponds to one or more matched operating modes of the touch firmware. The matched operating modes of the touch firmware that correspond to the touch modes may be associated in advance through a correspondence table, so that the electronic device can match, based on the identified touch scenario and the preset correspondence table, an operating mode of the touch firmware suitable for the current touch scenario. The correspondence table may be prestored on the electronic device.

For example, as shown in Table 3, the hand touch mode (identified by the sequence number 1) corresponds to levels 1 to 4 of matched screen refresh rates and a level 1 of an operating mode of the touch firmware, and the pen touch mode (identified by the sequence number 2) corresponds to levels 1 to 3 of matched screen refresh rates and a level 1 of an operating mode of the touch firmware.

**Table 3**

| Touch mode | Touch firmware | Screen refresh rate |
|---|---|---|
| Hand touch mode-1 | Firmware mode 1 | 1-1 corresponds to a 30 Hz level |
| | | 1-2 corresponds to a 60 Hz level |
| | | 1-3 corresponds to a 120 Hz level |
| | | 1-4 corresponds to a 144 Hz level |
| Pen touch mode-2 | Firmware mode 2 | 2-1 corresponds to a 30 Hz level |
| | | 2-2 corresponds to a 60 Hz level |
| | | 2-3 corresponds to a 120 Hz level |

When the electronic device identifies that the touch scenario changes, for example, changes from the hand touch mode to the pen touch mode, the electronic device may match a corresponding operating mode of the touch firmware, namely, the firmware mode 2, based on a changed touch scenario, namely, the pen touch mode, and deliver a related instruction to a touch driver at a kernel layer, to drive the operating mode of the touch firmware to be switched to the firmware mode 2. For another example, when the touch scenario changes from the pen touch mode to the hand touch mode, the electronic device may match a corresponding operating mode of the touch firmware, namely, the firmware mode 1, based on a changed touch scenario, namely, the hand touch mode, and deliver a related instruction to a touch driver at a kernel layer, to drive the operating mode of the touch firmware to be switched to the firmware mode 1.

S810: In response to the first refresh rate switching instruction, the electronic device performs layer composition of the N^{th} frame of image through the GPU, to obtain a to-be-displayed image.

In this embodiment of this application, when the electronic device detects that switching between refresh rates in different modes needs to be performed for the N^{th} frame of image, the electronic device may forcibly change a layer composition manner of the N^{th} frame of image to GPU composition. In this way, the electronic device can obtain the to-be-displayed image that is to be transmitted to a display after layer composition and overlay by the GPU.

Optionally, when the electronic device starts to refresh and display the N^{th} frame of image, a SurfaceFlinger may obtain all layers of the N^{th} frame of image and the first refresh rate switching instruction, provide data of all the layers and the first refresh rate switching instruction for an HWC, and ask the HWC for a processing manner. Because switching between refresh rates in different modes needs to be performed, the HWC may forcibly set, according to the first refresh rate switching instruction, layer composition manners marked for all the layers to GPU composition, so that the GPU can compose and overlay all the layers of the N^{th} frame of image, to finally form one frame of to-be-displayed image that is to be transmitted to the display.

In some embodiments, when the first refresh rate switching instruction detected by the N^{th} frame of image indicates to switch from the first refresh rate in the pen touch mode to the second refresh rate in the hand touch mode, because end-of-frame idle time in the pen touch mode is excessively short, a layer composition manner of a current image needs to be forcibly changed to GPU composition, to reduce the MDP load.

In some embodiments, when the first refresh rate switching instruction detected by the N^{th} frame of image indicates to switch from the second refresh rate in the hand touch mode to the first refresh rate in the pen touch mode, because end-of-frame idle time in the hand touch mode is generally sufficient, as shown in (a) in FIG. 2, in this refresh rate switching scenario, the layer composition manner of the current image may not be forcibly changed to GPU composition, and the MDP still performs layer composition. In this case, in response to the first refresh rate switching instruction, the electronic device still performs layer composition of the N^{th} frame of image through the MDP, to obtain the to-be-displayed image. Certainly, in this refresh rate switching scenario, the layer composition manner of the current image may alternatively be forcibly changed to GPU composition, to reduce the MDP load. In this way, a hand-to-pen refresh rate switching scenario and a pen-to-hand refresh rate switching scenario may not be distinguished, or may be distinguished. This is not limited in embodiments of this application.

S820: In response to the first refresh rate switching instruction, the electronic device switches a screen refresh rate of the display from the first refresh rate to the second refresh rate through the MDP.

In this embodiment of this application, when the first refresh rate switching instruction detected by the N^{th} frame of image indicates to switch from the first refresh rate in the pen touch mode to the second refresh rate in the hand touch mode, the electronic device may determine that switching between refresh rates in different modes needs to be performed for the N^{th} frame of image. In this way, the electronic device may control switching of a display timing through the MDP, to switch the screen refresh rate of the display from the first refresh rate to the second refresh rate by changing a display timing parameter.

In this embodiment of this application, in different touch modes, display timings corresponding to different refresh rates may be associated in advance through a correspondence table, as shown in Table 2. In this way, when needing to switch the refresh rate, the electronic device may determine a matched display timing based on the preset correspondence table, to complete refresh rate switching based on the matched display timing.

For example, the 60 Hz level in the pen touch mode is switched to the 60 Hz level in the hand touch mode. With reference to Table 2, it may be determined that, compared with those in a display timing corresponding to the 60 Hz level in the hand touch mode, an HBP, an HFP, and a VFP in a display timing corresponding to the 60 Hz level in the pen touch mode change. Therefore, in the display timing corresponding to 60 Hz in the current pen touch mode, the electronic device can reduce the HBP from 318 to 20, reduce the HFP from 20 to 19, and increase the VFP from 26 to 2340. In this way, effective sending-for-display time is reduced, and end-of-frame space is increased. However, time for refreshing and displaying one frame of image remains unchanged and is still 16.6 ms. For example, refer to a diagram of the display timing corresponding to the 60 Hz level in the pen touch mode shown in (b) in FIG. 2 and a diagram of the display timing corresponding to the 60 Hz level in the hand touch mode shown in (a) in FIG. 2. It is ensured that a current display timing still satisfies a screen refresh rate of 60 Hz. In this way, switching of the display timing is implemented. Then, the electronic device transmits image data to the display for display based on a switched display timing, so that an image can be refreshed and displayed at the switched screen refresh rate of 60 Hz matching finger touch.

It may be understood that, as shown in (b) in FIG. 2, in the display timing corresponding to the 60 Hz level in the pen touch mode, end-of-frame time is excessively short. When the 60 Hz level in the hand touch mode with a large timing difference needs to be switched to, the MDP cannot complete layer composition of an image frame and switching of the display timing corresponding to a refresh rate at the same time. However, in this embodiment of this application, because the graphics processing unit GPU is forcibly assigned to perform layer composition of the image frame, the MDP load is reduced. Therefore, the MDP can successfully complete switching of the display timing corresponding to the refresh rate within excessively short end-of-frame time. In this way, normal sending-for-display of the image frame is ensured, and switching of the refresh rate is also completed.

In some embodiments, when the first refresh rate switching instruction detected by the N^{th} frame of image indicates to switch from the second refresh rate in the hand touch mode to the first refresh rate in the pen touch mode, the electronic device may alternatively determine that switching between refresh rates in different modes needs to be performed for the N^{th} frame of image. In this way, the electronic device may control switching of a display timing through the MDP, to switch the screen refresh rate of the display from the second refresh rate to the first refresh rate by changing a display timing parameter.

For example, the 60 Hz level in the hand touch mode is switched to the 60 Hz level in the pen touch mode. With reference to Table 2, it may be determined that, compared with those in a display timing corresponding to the 60 Hz level in the pen touch mode, an HBP, an HFP, and a VFP in a display timing corresponding to the 60 Hz level in the hand touch mode change. Therefore, in the display timing corresponding to 60 Hz in the current hand touch mode, the electronic device can increase the HBP to 318, increase the HFP to 20, and reduce the VFP to 26. In this way, effective sending-for-display time is increased, and end-of-frame space is shortened. However, time for refreshing and displaying one frame of image remains unchanged and is still 16.6 ms. It is ensured that a current display timing satisfies a screen refresh rate of 60 Hz and also supports scanning of a stylus input. In this way, switching of the display timing is implemented. Then, the electronic device transmits image data to the display for display based on a switched display timing, so that an image can be refreshed and displayed at the switched screen refresh rate of 60 Hz matching the stylus.

It may be understood that, as shown in (a) in FIG. 2, end-of-frame time in the display timing corresponding to the 60 Hz level in the hand touch mode is sufficient. Therefore, in this embodiment of this application, when the 60 Hz level in the pen touch mode with a large timing difference needs to be switched to, the MDP can complete layer composition of an image frame and switching of the display timing corresponding to a refresh rate at the same time, or the graphics processing unit GPU can be forcibly assigned to perform layer composition of the image frame, and the MDP completes only switching of the display timing corresponding to the refresh rate.

S830: The electronic device displays the to-be-displayed image at the second refresh rate.

In this embodiment of this application, when the first refresh rate switching instruction indicates to switch from the first refresh rate in the pen touch mode to the second refresh rate in the hand touch mode, after controlling switching of the display timing through the MDP, the electronic device may transmit, to the display for display based on a switched display timing, data of the to-be-displayed image formed after GPU composition of the N^{th} frame of image. Because the MDP needs only to implement refresh rate switching, and layer composition is performed by the GPU, even if end-of-frame space time after display timing switching is excessively short, the electronic device can normally complete display timing switching and normal sending-for-display of the N^{th} frame of image.

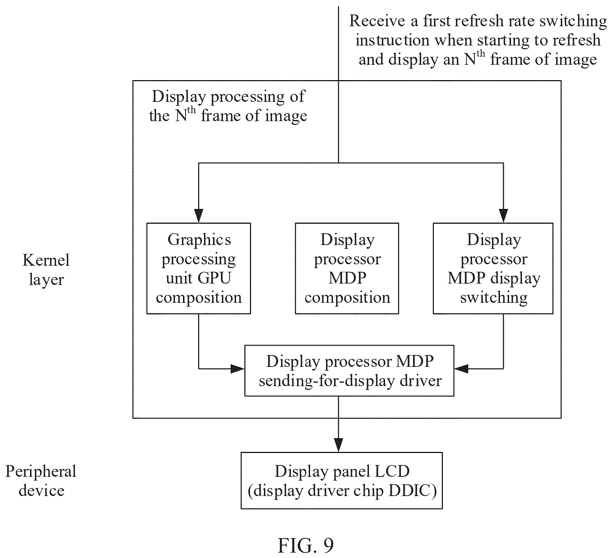

For example, as shown in FIG. 9, when the N^{th} frame of image is refreshed and displayed in a kernel phase, if a display driver of the electronic device receives the first refresh rate switching instruction, the display driver may drive a GPU composition module to complete composition and overlay of the layers of the N^{th} frame of image, and drive an MDP display switching module to complete switching of the corresponding display timing. After GPU composition of the N^{th} frame of image ends and switching of the display timing ends, an MDP sending-for-display driver (MDP MIPI driver) is controlled to transmit, to a display panel (for example, an LCD) through a MIPI interface based on the switched display timing, the to-be-displayed image formed after GPU composition.

The display panel may include a display driver chip DDIC, configured to: receive the data of the to-be-displayed image sent based on the display timing, and control the display panel to control a corresponding liquid crystal molecule based on each pixel in the display panel, so that the display panel displays the to-be-displayed image.

It may be understood that, because switching of the display timing, namely, switching of the screen refresh rate has been completed for the N^{th} frame of image, when starting to refresh and display an (N+1)^{th} frame of image, the electronic device does not need to perform display timing switching again, and the (N+1)^{th} frame of image may revert to an original layer composition manner. For example, all layers of the (N+1)^{th} frame of image are subject to MDP composition.

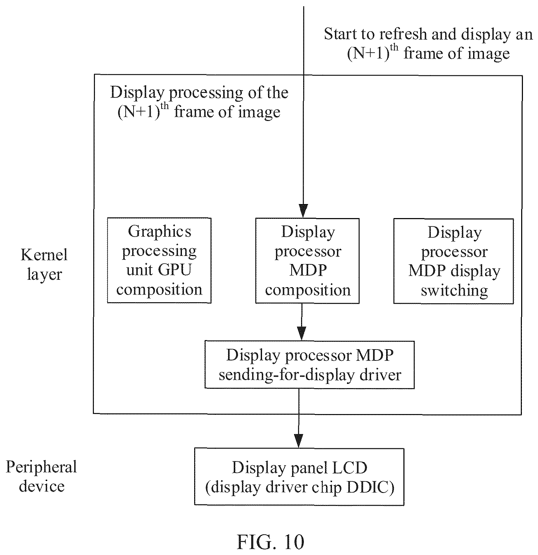

For example, as shown in FIG. 10, when the (N+1)^{th} frame of image is refreshed and displayed in the kernel phase, because the display driver of the electronic device does not receive the first refresh rate switching instruction, the display driver does not need to drive the MDP display switching module to complete switching of a corresponding display timing, and may restore the original layer composition manner, that is, drive an MDP composition module to complete composition and overlay of the layers of the (N+1)^{th} frame of image. After MDP composition of the (N+1)^{th} frame of image ends, the MDP sending-for-display driver (MDP MIPI driver) is controlled to transmit, to the display panel (for example, the LCD) for display through the MIPI interface based on the switched display timing, a to-be-displayed image formed after MDP composition.

It may be understood that an (N-1)^{th} frame of image is still refreshed and displayed at the screen refresh rate before switching. When the (N-1)^{th} frame of image is refreshed and displayed in the kernel phase, the display driver of the electronic device still uses the original layer composition manner, that is, drives the MDP composition module to complete composition and overlay of layers of the (N-1)^{th} frame of image. After MDP composition of the (N-1)^{th} frame of image ends, the MDP sending-for-display driver (MDP MIPI driver) is controlled to transmit, to the display panel (for example, the LCD) for display through the MIPI interface based on the display timing before switching, a to-be-displayed image formed after MDP composition.

In some embodiments, when the first refresh rate switching instruction detected by the N^{th} frame of image indicates to switch from the second refresh rate in the hand touch mode to the first refresh rate in the pen touch mode, if the graphics processing unit GPU is also forcibly assigned to perform layer composition of the N^{th} frame of image, after controlling switching of the display timing through the MDP, the electronic device may transmit, to the display for display based on the switched display timing, the data of the to-be-displayed image formed after GPU composition of the N^{th} frame of image. If the N^{th} frame of image still retains the original layer composition manner, for example, the MDP performs layer composition, after controlling switching of the display timing through the MDP, the electronic device may transmit, to the display for display based on the switched display timing, the data of the to-be-displayed image formed after MDP composition of the N^{th} frame of image.

In some scenarios, if the electronic device detects the first refresh rate switching instruction when starting to refresh and display the N^{th} frame of image, the electronic device may alternatively start, in a refresh and display process of a next frame, namely, the (N+1)^{th} frame of image, to respond to the first refresh rate switching instruction, that is, complete switching from the first refresh rate to the second refresh rate in the refresh and display process of the (N+1)^{th} frame of image.

It may be understood that, in the foregoing embodiment, switching from the refresh rate in the pen touch mode to the refresh rate in the hand touch mode is mainly used as an example to describe the refresh rate switching method in different touch modes. The foregoing principle may also be used to implement switching from the refresh rate in the hand touch mode to the refresh rate in the pen touch mode.

For example, if the electronic device detects a second refresh rate switching instruction when starting to refresh and display an N^{th} frame of image, where the second refresh rate switching instruction may indicate to switch from a second refresh rate in a hand touch mode to a first refresh rate in a pen touch mode, in response to the second refresh rate switching instruction, the electronic device may perform layer composition of the N^{th} frame of image through a GPU, to obtain a to-be-displayed image, and switch a screen refresh rate of a display from the second refresh rate in the hand touch mode to the first refresh rate in the pen touch mode through an MDP. In this way, the electronic device can display the to-be-displayed image at the first refresh rate.

According to the refresh rate switching method provided in this embodiment of this application, when switching between refresh rates in different modes needs to be performed, layer composition of an image frame originally performed by the display processor MDP can be switched to layer composition of the image frame performed by the graphics processing unit GPU. In this way, the MDP load can be reduced, and in a frame idle area, only switching of the display timing by the MDP needs to be completed, and an MDP composition action is no longer performed at the same time. In this way, it is ensured that the image frame can be sent for display in time, and a problem that a frame of image cannot be normally displayed in a switching process is avoided.

In some embodiments, when the first refresh rate is the same as the second refresh rate, it may be considered that refresh rate switching triggered by the electronic device relates only to touch mode switching, and a specific frame rate level is not changed, that is, time for refreshing and displaying each frame of image before and after switching remains unchanged. For example, the 60 Hz level in the pen touch mode is switched to the 60 Hz level in the hand touch mode. When the display driver completes refresh rate switching, only touch mode switching is related, and a specific frame rate (which is always 60 Hz) is not changed, that is, the time for refreshing and displaying each frame of image before and after switching remains unchanged, and is still 16.6 ms.

In some embodiments, when the first refresh rate is different from the second refresh rate, it may be considered that refresh rate switching triggered by the electronic device relates to touch mode switching, and also relates to switching of a specific frame rate level, that is, time for refreshing and displaying each frame of image before and after switching changes. For example, the 144 Hz level in the hand touch mode is switched to the 60 Hz level in the pen touch mode. When the display driver completes refresh rate switching, touch mode switching is related, switching of the specific frame rate level (switching from 144 Hz to 60 Hz) is also related, that is, time for refreshing and displaying each frame of image before switching is 6.9 ms, and time for refreshing and displaying each frame of image after switching is 16.6 ms.

In this embodiment of this application, in a scenario in which both touch mode switching and frame rate level switching are related, if hardware of the electronic device can support simultaneous touch mode switching and frame rate level switching, the electronic device can directly implement switching from the first refresh rate in the pen touch mode to the second refresh rate in the hand touch mode or switching from the second refresh rate in the hand touch mode to the first refresh rate in the pen touch mode in a refresh and display process of the N^{th} frame.

For example, when starting to refresh and display the N^{th} frame of image, the electronic device detects the first refresh rate switching instruction that indicates to switch from the first refresh rate in the pen touch mode to the second refresh rate in the hand touch mode. In response to the first refresh rate switching instruction, the electronic device performs layer composition of the N^{th} frame of image through the GPU, to obtain a to-be-displayed first image. The screen refresh rate of the display is switched from the first refresh rate in the pen touch mode to the second refresh rate in the hand touch mode through the MDP. In this way, the electronic device displays the first image at the second refresh rate in the hand touch mode.

In this embodiment of this application, if the hardware of the electronic device cannot support simultaneous touch mode switching and frame rate level switching, the electronic device may alternatively separately perform touch mode switching and frame rate level switching.

In some embodiments, when the first refresh rate switching instruction indicates to switch from the second refresh rate in the hand touch mode to the first refresh rate in the pen touch mode, the electronic device may first implement frame rate level switching, and then switch a touch mode. In this way, switching between different refresh rates in different touch modes is completed.

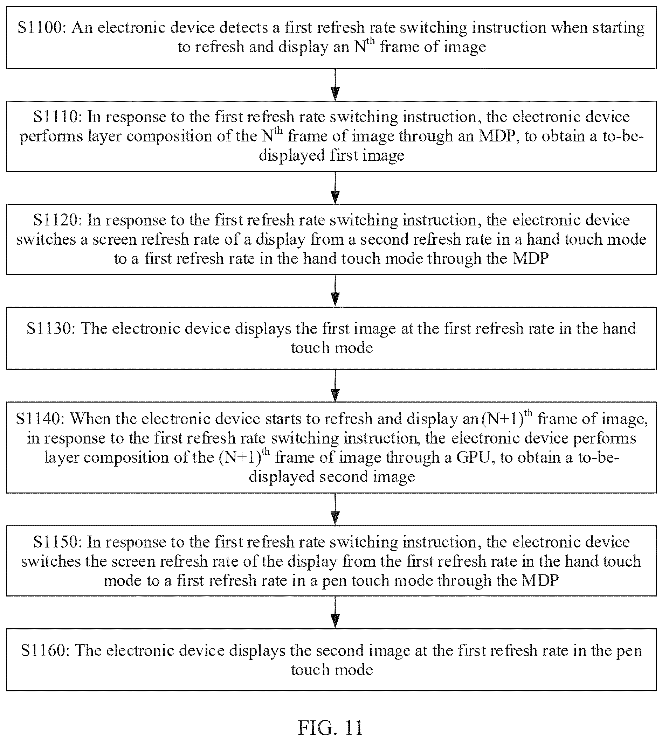

Refer to FIG. 11. An embodiment of this application provides another refresh rate switching method. The method may include the following steps.

S1100: The electronic device detects a first refresh rate switching instruction when starting to refresh and display an N^{th} frame of image.

In this embodiment of this application, in a pen touch mode, the electronic device supports a first refresh rate, and in a hand touch mode, the electronic device supports the first refresh rate and a second refresh rate. The first refresh rate is different from the second refresh rate.

In some embodiments, the first refresh rate switching instruction indicates to switch from the second refresh rate in the hand touch mode to the first refresh rate in the pen touch mode. For example, the first refresh rate switching instruction may indicate to switch from a 144 Hz level in the hand touch mode to a 60 Hz level in the pen touch mode. In the hand touch mode, the electronic device can support 60 Hz and 144 Hz.

When detecting the first refresh rate switching instruction, the electronic device may determine that switching between different refresh rates in different touch modes needs to be performed. When switching between different refresh rates in different touch modes is performed, that is, both touch modes and refresh rate levels need to be switched, therefore the electronic device may first switch the refresh rate levels, to adjust refresh rates in different touch modes to a same refresh rate level, and then implement switching between touch modes at the same refresh rate level.

For example, when the first refresh rate switching instruction indicates to switch from the 144 Hz level (identified by the sequence number 1-4) in the hand touch mode to the 60 Hz level (identified by the sequence number 2-1) in the pen touch mode, as shown in Table 3, the electronic device may first reduce a frame rate level to a 60 Hz level (identified by the sequence number 1-2) in the hand touch mode, and then implement switching between touch modes at a same refresh rate level, that is, switch from the 60 Hz level (identified by the sequence number 1-2) in the hand touch mode to the 60 Hz level (identified by the sequence number 2-2) in the pen touch mode. A switching sequence is 1-4->1-2->2-2.

It may be understood that, because some refresh rate levels (for example, 144 Hz) supported in the hand touch mode cannot be supported in the pen touch mode, the touch mode cannot be switched first without adjusting the frame rate level. For example, when the 144 Hz level in the hand touch mode is switched to the 60 Hz level in the pen touch mode, the touch mode cannot be switched first when the 144 Hz level is maintained, that is, the 144 Hz level in the pen touch mode cannot be first switched to, because the pen touch mode cannot support 144 Hz. As a result, a 144 Hz level in the pen touch mode cannot be switched to the 60 Hz level in the pen touch mode. Therefore, the frame rate level needs to be first switched, to adjust to a frame rate range supported in the pen touch mode, and then switching between the touch modes is implemented.

In some embodiments, when triggering refresh rate switching, the electronic device may also trigger switching of an operating mode of touch firmware.

Optionally, the electronic device may trigger switching of the operating mode of the touch firmware only when implementing switching between the touch modes at the same refresh rate level.

For example, when the first refresh rate switching instruction indicates to switch from the 144 Hz level in the hand touch mode to the 60 Hz level in the pen touch mode, the electronic device may first reduce a frame rate level to the 60 Hz level in the hand touch mode. In this case, switching of the operating mode of the touch firmware may not be triggered. Instead, when switching between touch modes at a same refresh rate level is performed, the switching of the operating mode of the touch firmware is triggered. To be specific, a corresponding operating mode, namely, a firmware mode 2, of the touch firmware is matched based on a changed touch scenario, namely, the pen touch mode, and a related instruction is delivered to a touch driver at a kernel layer, to drive the operating mode of the touch firmware to be switched to the firmware mode 2.

Optionally, the electronic device may alternatively start to trigger switching of the operating mode of the touch firmware when implementing switching between different frame rates in a same touch mode, and does not need to wait until switching of the touch mode at the same refresh rate level is implemented, for starting to trigger switching of the operating mode of the touch firmware.

For example, when the first refresh rate switching instruction indicates to switch from the 144 Hz level in the hand touch mode to the 60 Hz level in the pen touch mode, the electronic device may first reduce a frame rate level to the 60 Hz level in the hand touch mode. In this case, switching of the operating mode of the touch firmware may be triggered at the same time. To be specific, a corresponding operating mode, namely, a firmware mode 2, of the touch firmware is matched based on a changed touch scenario, namely, the pen touch mode, and a related instruction is delivered to a touch driver at a kernel layer, to drive the operating mode of the touch firmware to be switched to the firmware mode 2. In this case, a related instruction is also delivered to a display driver at the kernel layer, to drive to complete switching of the frame rate level in the hand touch mode to the 60 Hz level.

S1110: In response to the first refresh rate switching instruction, the electronic device performs layer composition of the N^{th} frame of image through an MDP, to obtain a to-be-displayed first image.

In this embodiment of this application, when the electronic device detects that switching between different refresh rates in different modes needs to be performed (the second refresh rate is switched to the first refresh rate) for the N^{th} frame of image, the electronic device may first adjust the frame rate level to the first refresh rate in the original touch mode in a refresh and display process of the N^{th} frame of image. In this way, after refresh rates in different touch modes are adjusted to the same refresh rate level, subsequent mode switching is performed.

It may be understood that, because switching between different refresh rates in a same touch mode is performed, according to a current refresh rate switching method, a refresh rate may be changed only by changing a VFP parameter, namely, a length of end-of-frame idle time, in a display timing, and no display exception occurs. Therefore, a layer composition manner of the N^{th} frame of image may still be performing by the MDP. In addition, because the hand touch mode is always used, scanning of a stylus input does not need to be supported, and the end-of-frame idle time is sufficient for the MDP to implement refresh rate switching and layer composition. In this way, when starting to refresh and display the N^{th} frame of image, the electronic device does not need to change the layer composition manner of the N^{th} frame of image.

Optionally, when the electronic device starts to refresh and display the N^{th} frame of image, a SurfaceFlinger may obtain all layers of the N^{th} frame of image and the first refresh rate switching instruction, provide data of all the layers and the first refresh rate switching instruction for an HWC, and ask the HWC for a processing manner. Because switching between different refresh rates in different modes needs to be performed, the HWC may first maintain an original layer composition manner, for example, MDP composition, of the N^{th} frame of image according to the first refresh rate switching instruction, so that the MDP may compose and overlay all the layers of the N^{th} frame of image, and finally form one frame of to-be-displayed image to be transmitted to a display, namely, the first image.

It may be understood that, before the electronic device triggers switching between different refresh rates in different modes, a layer composition manner of an image before the N^{th} frame of image is still the original layer composition manner, for example, MDP composition, so that the MDP may compose and overlay all the layers of the N^{th} frame of image, and finally form the frame of to-be-displayed image to be transmitted to the display.

S1120: In response to the first refresh rate switching instruction, the electronic device switches a screen refresh rate of the display from the second refresh rate in the hand touch mode to the first refresh rate in the hand touch mode through the MDP.

In this embodiment of this application, when the electronic device detects, when starting to refresh and display the N^{th} frame of image, that switching between different refresh rates in different modes needs to be performed, the electronic device may first control switching of the display timing through the MDP, and switch the screen refresh rate of the display from the second refresh rate in the hand touch mode to the first refresh rate in the hand touch mode by changing the VFP parameter in the display timing. In this way, switching between different refresh rates in the same touch mode is completed first.

In this embodiment of this application, when needing to perform switching between different refresh rates in the same touch mode, the electronic device may determine a matched display timing based on a preset correspondence table, to complete switching between different refresh rates in the same touch mode based on the matched display timing.

In an example, a 120 Hz level in the hand touch mode is switched to the 60 Hz level in the pen touch mode. The electronic device may first complete switching from the 120 Hz level in the hand touch mode to the 60 Hz level in the hand touch mode. In this case, with reference to Table 2, it may be determined that, compared with that in a display timing corresponding to the 60 Hz level in the hand touch mode, only a VFP (namely, end-of-frame idle time) in a display timing corresponding to the 120 Hz level in the hand touch mode changes. Therefore, the electronic device may increase the VFP in the display timing corresponding to current 120 Hz from 26 to 2340. In this way, only the end-of-frame space time is increased, and effective sending-for-display time remains unchanged, so that time for refreshing and displaying one frame of image is prolonged, and then a number of times that image frames are refreshed and displayed per second is reduced, thereby reducing the screen refresh rate.

It may be understood that, before the electronic device triggers switching between different refresh rates in different modes, the electronic device refreshes and displays the image before the N^{th} frame of image at a screen refresh rate of 120 Hz in the hand touch mode before switching.

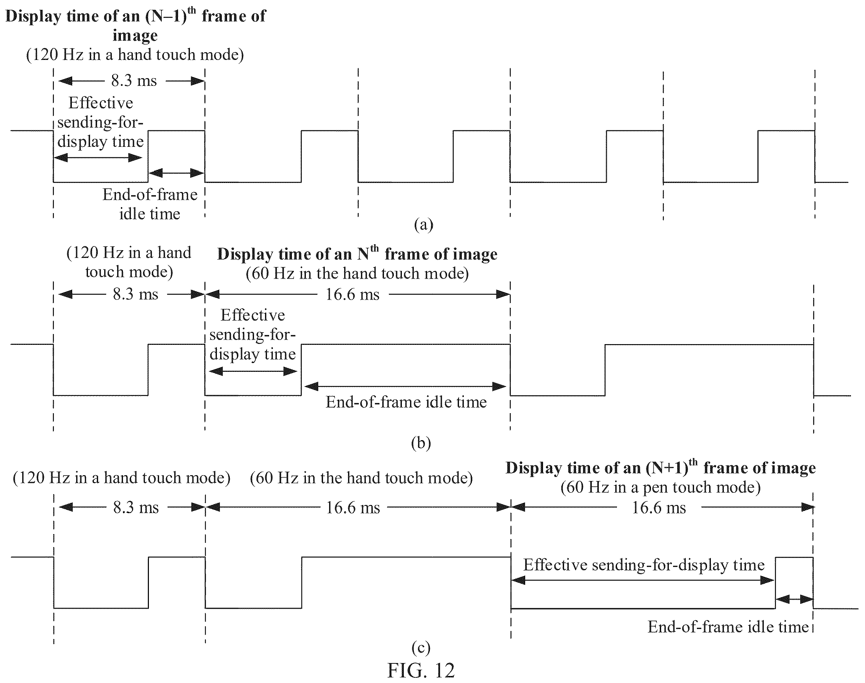

As shown in (a) in FIG. 12, an (N-1)^{th} frame of image is used as an example. When the electronic device starts to refresh and display the (N-1)^{th} frame of image, because a current screen refresh rate of the display is the 120 Hz level in the hand touch mode, the electronic device may refresh and display the (N-1)^{th} frame of image based on the display timing corresponding to the 120 Hz level in the hand touch mode, and time for refreshing and displaying the (N-1)^{th} frame of image is 8.3 ms.

As shown in (b) in FIG. 12, after the (N-1)^{th} frame of image is refreshed and displayed, the electronic device may start to refresh and display the N^{th} frame of image. In this case, if the electronic device detects the first refresh rate switching instruction for switching from the 120 Hz level in the hand touch mode to the 60 Hz level in the pen touch mode, the electronic device may respond to the first refresh rate switching instruction, and when starting to refresh and display the N^{th} frame of image, first control switching of the display timing through the MDP, and increase a time length of the VFP (namely, the end-of-frame idle time), to first complete switching from the 120 Hz level in the hand touch mode to the 60 Hz level in the hand touch mode.

As shown in (b) in FIG. 12, because the effective sending-for-display time remains unchanged, only the end-of-frame space time is increased, so that time for refreshing and displaying the N^{th} frame of image is prolonged to 16.6 ms, and a number of times that image frames are refreshed and displayed per second is reduced to 60, thereby reducing the screen refresh rate to 60 Hz.

In another example, the 144 Hz level in the hand touch mode is switched to the 60 Hz level in the pen touch mode. The electronic device may first complete switching from the 144 Hz level in the hand touch mode to the 60 Hz level in the hand touch mode. In this case, with reference to Table 2, it may be determined that, compared with that in a display timing corresponding to the 60 Hz level in the hand touch mode, only a VFP (namely, end-of-frame idle time) in a display timing corresponding to the 144 Hz level in the hand touch mode changes. Therefore, the electronic device may increase the VFP in the display timing corresponding to current 144 Hz from 15 to 2340. In this way, only the end-of-frame space time is increased, and effective sending-for-display time remains unchanged, so that time for refreshing and displaying one frame of image is prolonged, and then a number of times that image frames are refreshed and displayed per second is reduced, thereby reducing the screen refresh rate.

It may be understood that, before the electronic device triggers switching between different refresh rates in different modes, the electronic device refreshes and displays the image before the N^{th} frame of image at a screen refresh rate of 144 Hz in the hand touch mode before switching.

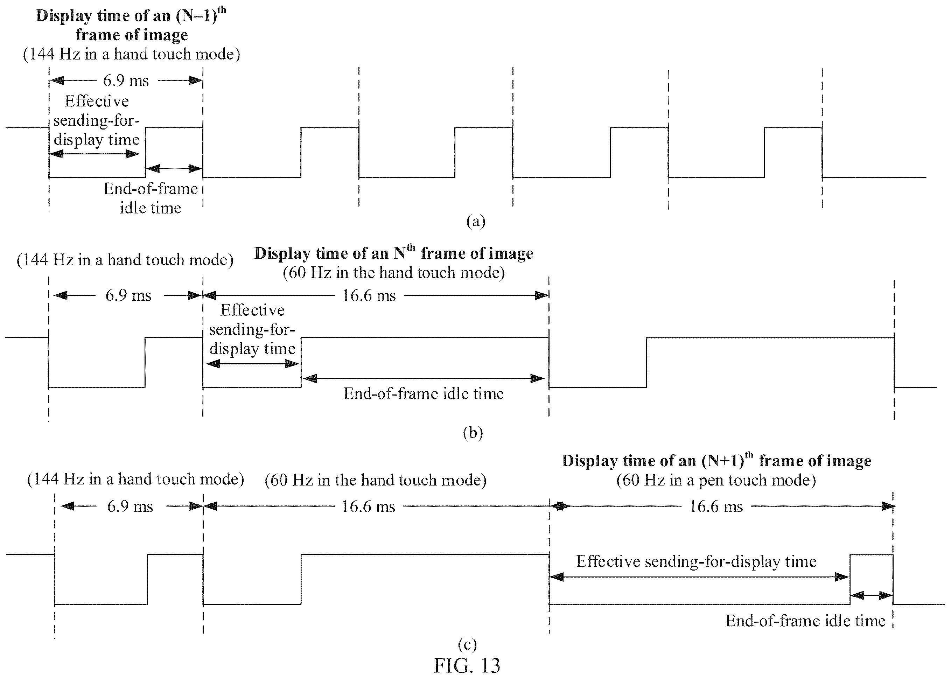

As shown in (a) in FIG. 13, an (N-1)^{th} frame of image is used as an example. When the electronic device starts to refresh and display the (N-1)^{th} frame of image, because a current screen refresh rate of the display is the 144 Hz level in the hand touch mode, the electronic device may refresh and display the (N-1)^{th} frame of image based on the display timing corresponding to the 144 Hz level in the hand touch mode, and time for refreshing and displaying the (N-1)^{th} frame of image is 6.9 ms.

As shown in (b) in FIG. 13, after the (N-1)^{th} frame of image is refreshed and displayed, the electronic device may start to refresh and display the N^{th} frame of image. In this case, if the electronic device detects the first refresh rate switching instruction for switching from the 144 Hz level in the hand touch mode to the 60 Hz level in the pen touch mode, the electronic device may respond to the first refresh rate switching instruction, and when starting to refresh and display the N^{th} frame of image, first control switching of the display timing through the MDP, and increase a time length of the VFP (namely, the end-of-frame idle time), to first complete switching from the 144 Hz level in the hand touch mode to the 60 Hz level in the hand touch mode.

As shown in (b) in FIG. 13, because the effective sending-for-display time remains unchanged, only the end-of-frame space time is increased, so that time for refreshing and displaying the N^{th} frame of image is prolonged to 16.6 ms, and a number of times that image frames are refreshed and displayed per second is reduced to 60, thereby reducing the screen refresh rate to 60 Hz.

S1130: The electronic device displays the first image at the first refresh rate in the hand touch mode.

After controlling switching of the display timing through the MDP, the electronic device may transmit, to a display for display based on a switched display timing corresponding to the first refresh rate in the hand touch mode, data of the to-be-displayed first image formed after MDP composition of the N^{th} frame of image. Because switching of the current display timing relates only to the VFP parameter, the end-of-frame idle time is sufficient for the MDP to implement refresh rate switching and layer composition. In this way, refresh and display of the first image formed after MDP composition of the N^{th} frame of image can be normally completed.

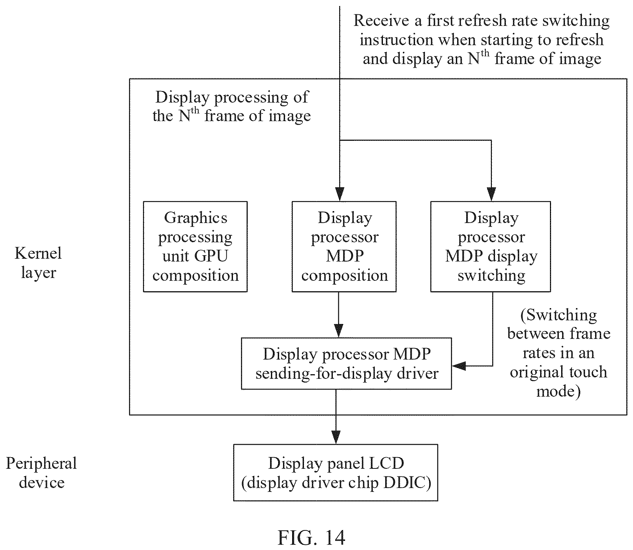

For example, as shown in FIG. 14, when the N^{th} frame of image is refreshed and displayed in a kernel phase, the MDP implements refresh rate switching and layer composition. Specifically, if the display driver of the electronic device receives the first refresh rate switching instruction, the display driver may maintain the original layer composition manner of the N^{th} frame of image, that is, drive an MDP composition module to complete composition and overlay of the layers of the N^{th} frame of image, and drive an MDP display switching module to complete switching of a corresponding display timing. In this case, the MDP display switching module is used to complete switching between different frame rates in the hand touch mode, and switching between the touch modes is not related. In other words, the MDP display switching module is used to switch from a display timing corresponding to the second refresh rate in the hand touch mode to a display timing corresponding to the first refresh rate in the hand touch mode, that is, switch between display timings corresponding to different refresh rates in a same touch mode.

After MDP composition of the N^{th} frame of image ends and switching of the display timing ends, the electronic device controls an MDP sending-for-display driver (MDP MIPI driver) to transmit, to a display panel (for example, an LCD) for display through a MIPI interface based on the switched display timing corresponding to the first refresh rate in the hand touch mode, the first image formed after MDP composition.

It may be understood that, before the electronic device triggers switching between different refresh rates in different modes, for the image before the N^{th} frame of image, the electronic device refreshes and displays the image before the N^{th} frame of image based on the display timing corresponding to the second refresh rate in the hand touch mode before switching.

The (N-1)^{th} frame of image is used as an example. When the (N-1)^{th} frame of image is refreshed and displayed in the kernel phase, the display driver of the electronic device also uses the original layer composition manner, that is, drives an MDP composition module to complete composition and overlay of the layers of the (N-1)^{th} frame of image. Because the display driver of the electronic device does not receive a refresh rate switching instruction when refreshing and displaying the (N-1)^{th} frame of image, the display driver does not need to drive the MDP display switching module to complete switching of a corresponding display timing. Therefore, when the (N-1)^{th} frame of image is refreshed and displayed in the kernel phase, the electronic device drives only the MDP composition module to complete layer composition of the (N-1)^{th} frame of image. After MDP composition of the (N-1)^{th} frame of image ends, the electronic device controls the MDP sending-for-display driver (MDP MIPI driver) to transmit, to the display panel (for example, the LCD) for display through the MIPI interface based on an original refresh rate, namely, the display timing corresponding to the second refresh rate in the hand touch mode before switching, an image formed after MDP composition.

It may be understood that, because the second refresh rate in the hand touch mode has been switched to the first refresh rate in the hand touch mode for the N^{th} frame of image, that is, switched between different refresh rates in a same touch mode (namely, the hand touch mode), the second refresh rate in the hand touch mode is adjusted to a same frame rate level as the first refresh rate in the pen touch mode. Therefore, only switching between touch modes at the same frame rate level, that is, switching from the first refresh rate in the hand touch mode to the first refresh rate in the pen touch mode, can be completed subsequently. In this way, switching between different refresh rates in different touch modes is implemented.

S1140: When the electronic device starts to refresh and display an (N+1)^{th} frame of image, in response to the first refresh rate switching instruction, the electronic device performs layer composition of the (N+1)^{th} frame of image through a GPU, to obtain a to-be-displayed second image.

In some embodiments, after completing switching from the second refresh rate in the hand touch mode to the first refresh rate in the hand touch mode, the electronic device may complete switching between the touch modes at the same frame rate level when starting to refresh and display a next frame of image, namely, the (N+1)^{th} frame of image. To be specific, the first refresh rate in the hand touch mode is switched to the first refresh rate in the pen touch mode.

Because a difference between display timings corresponding to refresh rates in different touch modes is large, the MDP needs to spend much time in completing switching and adjustment of the display timing. Therefore, in this embodiment of this application, in a refresh and display process of the (N+1)^{th} frame of image, the electronic device may refer to the refresh rate switching method in the foregoing embodiment, and assign the graphics processing unit GPU to perform layer composition, to reduce an MDP load. In this case, the MDP needs only to implement switching between the touch modes at the same frame rate level. In this way, regardless of whether end-of-frame idle time at a current refresh rate is sufficient, normal sending-for-display of the (N+1)^{th} frame of image and the normal switching of the refresh rate can be ensured.

Optionally, when the electronic device starts to refresh and display the (N+1)^{th} frame of image, the SurfaceFlinger may obtain all layers of the (N+1)^{th} frame of image and the first refresh rate switching instruction, provide data of all the layers and the first refresh rate switching instruction for the HWC, and ask the HWC for a processing manner. Because switching to a same refresh rate between different modes needs to be performed, the HWC may forcibly set, according to the first refresh rate switching instruction, layer composition manners marked for all the layers of the (N+1)^{th} frame of image to GPU composition, so that the GPU can compose and overlay all the layers of the (N+1)^{th} frame of image, to finally form one frame of to-be-displayed image that is to be transmitted to the display, namely, the second image.

In some embodiments, the first refresh rate in the hand touch mode is switched to the first refresh rate in the pen touch mode. End-of-frame time in the hand touch mode is generally sufficient. As shown in (a) in FIG. 2, end-of-frame time in the display timing corresponding to the 60 Hz level in the hand touch mode is sufficient. Even if the MDP needs to spend much time in completing switching and adjustment of the display timing, the MDP may also complete layer composition of an image frame and switching of the display timing corresponding to the refresh rate at the same time. Therefore, in a refresh and display process of the (N+1)^{th} frame of image, the electronic device may alternatively still use an original layer composition manner without changing a layer composition manner of the current image to GPU composition. For example, the MDP still performs layer composition of the (N+1)^{th} frame of image, to obtain the to-be-displayed second image.

S1150: In response to the first refresh rate switching instruction, the electronic device switches the screen refresh rate of the display from the first refresh rate in the hand touch mode to the first refresh rate in the pen touch mode through the MDP.

In this embodiment of this application, when the electronic device detects that switching to a same refresh rate between different modes needs to be performed for the (N+1)^{th} frame of image, the electronic device may control switching of a display timing through the MDP, and switch the screen refresh rate of the display from the first refresh rate in the hand touch mode to the first refresh rate in the pen touch mode by changing a display timing parameter.

In this embodiment of this application, in different touch modes, display timings corresponding to different refresh rates may be associated in advance through a correspondence table, as shown in Table 2. In this way, when needing to switch the refresh rate, the electronic device may determine a matched display timing based on the preset correspondence table, to complete refresh rate switching based on the matched display timing.

In an example, the 120 Hz level in the hand touch mode is switched to the 60 Hz level in the pen touch mode. In the refresh and display process of the N^{th} frame of image, after completing switching from the 120 Hz level in the hand touch mode to the 60 Hz level in the hand touch mode, the electronic device may continue to complete switching from the 60 Hz level in the hand touch mode to the 60 Hz level in the pen touch mode in the refresh and display process of the (N+1)^{th} frame of image.

For example, with reference to Table 2, it may be determined that, compared with those in the display timing corresponding to the 60 Hz level in the pen touch mode, an HBP, an HFP, and the VFP in the display timing corresponding to the 60 Hz level in the hand touch mode change. Therefore, in the refresh and display process of the N^{th} frame of image, as shown in (b) in FIG. 12, after switching to the display timing corresponding to the 60 Hz level in the hand touch mode, in the refresh and display process of the (N+1)^{th} frame of image, in the display timing corresponding to the 60 Hz level in the current hand touch mode, the electronic device may increase the HBP from 20 to 318, increase the HFP from 19 to 20, and reduce the VFP from 2340 to 26, to implement switching to the display timing corresponding to the 60 Hz level in the pen touch mode.

It may be understood that increases of values of the HBP and the HFP cause longer effective sending-for-display time of the (N+1)^{th} frame of image. Because refresh rates in the two touch modes are both 60 Hz, and refresh and display time of one frame of image is fixed and is 16.6 ms, corresponding end-of-frame idle time is shortened.

As shown in (c) in FIG. 12, after the N^{th} frame of image is refreshed and displayed, the electronic device may start to refresh and display the (N+1)^{th} frame of image. In this case, the electronic device may continue to respond to the first refresh rate switching instruction, and when starting to refresh and display the (N+1)^{th} frame of image, first control switching of a display timing through the MDP, to increase a time length of effective sending-for-display time, and shorten a time length of the VFP (namely, the end-of-frame idle time), thereby completing switching from the 60 Hz level in the hand touch mode to the 60 Hz level in the pen touch mode. As shown in (c) in FIG. 12, time for refreshing and displaying the (N+1)^{th} frame of image remains unchanged, and is still 16.6 ms.

In this way, the switched display timing satisfies the screen refresh rate of 60 Hz, and can also support scanning of a stylus input. In this way, switching between the touch modes at the same frame rate level is implemented. Then, the electronic device transmits image data to the display for display based on the switched display timing, so that an image can be refreshed and displayed at the switched screen refresh rate of 60 Hz matching a stylus.

In another example, the 144 Hz level in the hand touch mode is switched to the 60 Hz level in the pen touch mode. In the refresh and display process of the N^{th} frame of image, after completing switching from the 144 Hz level in the hand touch mode to the 60 Hz level in the hand touch mode, the electronic device may continue to complete switching from the 60 Hz level in the hand touch mode to the 60 Hz level in the pen touch mode in the refresh and display process of the (N+1)^{th} frame of image.

For example, with reference to Table 2, it may be determined that, compared with those in the display timing corresponding to the 60 Hz level in the pen touch mode, the HBP, the HFP, and the VFP in the display timing corresponding to the 60 Hz level in the hand touch mode change. Therefore, in the refresh and display process of the N^{th} frame of image, as shown in (b) in FIG. 13, after switching from the display timing corresponding to the 144 Hz level in the hand touch mode to the display timing corresponding to the 60 Hz level in the hand touch mode, in the refresh and display process of the (N+1)^{th} frame of image, in the display timing corresponding to the 60 Hz level in the current hand touch mode, the electronic device may increase the HBP from 20 to 318, increase the HFP from 19 to 20, and reduce the VFP from 2340 to 26, to implement switching to the display timing corresponding to the 60 Hz level in the pen touch mode.

As shown in (c) in FIG. 13, after the N^{th} frame of image is refreshed and displayed, the electronic device may start to refresh and display the (N+1)^{th} frame of image. In this case, the electronic device may continue to respond to the first refresh rate switching instruction, and when starting to refresh and display the (N+1)^{th} frame of image, first control switching of a display timing through the MDP, to increase a time length of effective sending-for-display time, and shorten a time length of the VFP (namely, the end-of-frame idle time), thereby completing switching from the 60 Hz level in the hand touch mode to the 60 Hz level in the pen touch mode. As shown in (c) in FIG. 13, time for refreshing and displaying the (N+1)^{th} frame of image remains unchanged, and is still 16.6 ms. In this way, the switched display timing satisfies the screen refresh rate of 60 Hz, and can also support scanning of a stylus input. In this way, switching between the touch modes at the same frame rate level is implemented.

S1160: The electronic device displays the second image at the first refresh rate in the pen touch mode.

In some embodiments, after controlling switching of the display timing through the MDP, the electronic device may transmit, to the display for display based on a switched display timing corresponding to the first refresh rate in the pen touch mode, data of the to-be-displayed second image formed after GPU composition of the (N+1)^{th} frame of image. Because the MDP needs only to implement refresh rate switching, and layer composition is performed by the GPU, even if end-of-frame space time after display timing switching is excessively short, the electronic device can normally complete display timing switching and normal sending-for-display of the second image formed after GPU composition of the (N+1)^{th} frame of image.

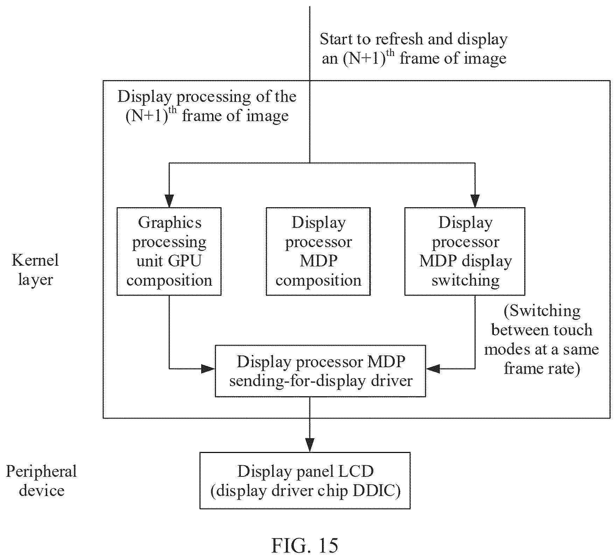

For example, as shown in FIG. 15, when the (N+1)^{th} frame of image is refreshed and displayed in the kernel phase, the display driver of the electronic device continues to respond to the first refresh rate switching instruction, drives a GPU composition module to complete composition and overlay of the layers of the (N+1)^{th} frame of image, and drives the MDP display switching module to complete switching of a corresponding display timing. After GPU composition of the (N+1)^{th} frame of image ends and switching of the display timing ends, the MDP sending-for-display driver (MDP MIPI driver) is controlled to transmit, to the display panel (for example, the LCD) through the MIPI interface based on the switched display timing, the to-be-displayed second image formed after GPU composition.

It may be understood that, because switching of the first refresh rate in the pen touch mode has been completed for the (N+1)^{th} frame of image, when the electronic device starts to refresh and display an (N+2)^{th} frame of image, if no new refresh rate switching instruction is received, display timing switching does not need to be performed, and the (N+2)^{th} frame of image may be restored to an original layer composition manner. For example, all layers of the (N+2)^{th} frame of image are restored to MDP composition.

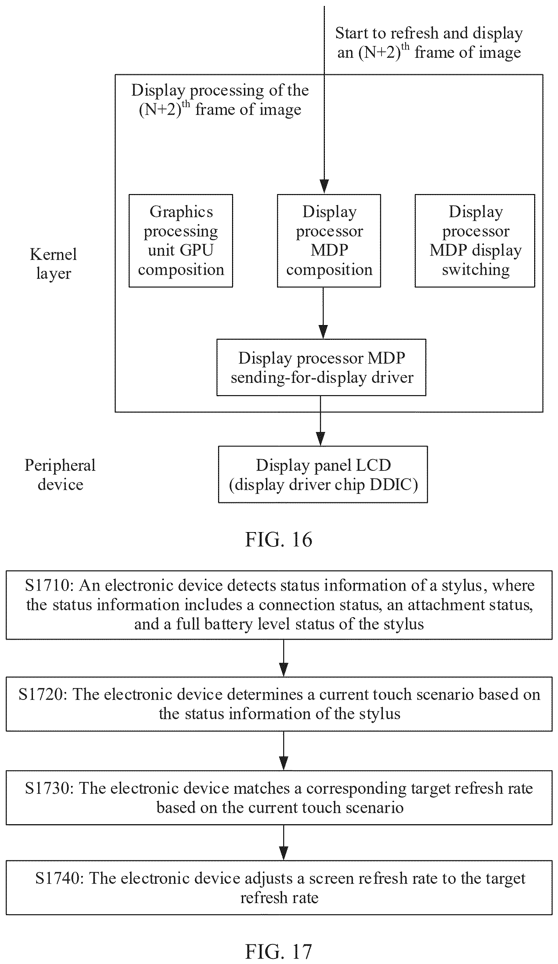

For example, as shown in FIG. 16, when the (N+2)^{th} frame of image is refreshed and displayed in the kernel phase, because the display driver of the electronic device does not receive a new refresh rate switching instruction, the display driver does not need to drive the MDP display switching module to complete switching of a corresponding display timing, and may restore the original layer composition manner, that is, drive the MDP composition module to complete composition and overlay of the layers of the (N+2)^{th} frame of image. After MDP composition of the (N+2)^{th} frame of image ends, the MDP sending-for-display driver (MDP MIPI driver) is controlled to transmit, to the display panel (for example, the LCD) for display through the MIPI interface based on the switched display timing corresponding to the first refresh rate in the pen touch mode, a to-be-displayed image formed after MDP composition.

In some scenarios, in the refresh and display process of the N^{th} frame of image, after switching from the second refresh rate in the hand touch mode to the first refresh rate in the hand touch mode is completed, switching from the first refresh rate in the hand touch mode to the first refresh rate in the pen touch mode may alternatively be completed after refresh and display of one frame of image. To be specific, in a refresh and display process of the (N+2)^{th} frame of image, switching from the first refresh rate in the hand touch mode to the first refresh rate in the pen touch mode is completed.

In some embodiments, in response to the first refresh rate switching instruction, when refreshing and displaying the N^{th} frame of image at the kernel layer, the electronic device may deliver a frame rate switching instruction for a same touch mode, to trigger the display area at the kernel layer to complete switching from the second refresh rate in the hand touch mode to the first refresh rate in the hand touch mode. When the (N+1)^{th} frame of image is refreshed and displayed at the kernel layer, a touch mode switching instruction for a same frame rate is delivered, to trigger the display area at the kernel layer to complete switching from the first refresh rate in the hand touch mode to the first refresh rate in the pen touch mode.

In some embodiments, because the first refresh rate in the hand touch mode is switched to the first refresh rate in the pen touch mode, and the end-of-frame time in the hand touch mode is generally sufficient, the electronic device may alternatively still perform layer composition of the (N+1)^{th} frame of image through the MDP in the refresh and display process of the (N+1)^{th} frame of image, to obtain the to-be-displayed second image. In this way, after controlling switching of the display timing through the MDP, the electronic device may transmit, to the display for display based on a switched display timing corresponding to the first refresh rate in the pen touch mode, data of the to-be-displayed second image formed after MDP composition of the (N+1)^{th} frame of image.

According to the refresh rate switching method provided in this embodiment of this application, when switching between different refresh rates in different touch modes needs to be performed, switching between refresh rates is first completed, to adjust to a same refresh rate level, and then switching between different touch modes at a same refresh rate is performed. In addition, when switching between refresh rates in different touch modes is performed, the electronic device may switch, to layer composition of an image frame performed by the graphics processing unit GPU, layer composition of the image frame originally performed by the display processor MDP. In this way, the MDP load can be reduced, and in a frame idle area, only switching of the display timing by the MDP needs to be completed, and an MDP composition action is no longer performed at the same time. In this way, it is ensured that the image frame can be sent for display in time, and a problem that a frame of image cannot be normally displayed during switching between refresh rates in different touch modes is avoided. In this way, when it is ensured that real-time switching is smoothly completed, a constraint that display timing parameters of a device in different modes cannot be excessively large is reduced, a difference between display timings in different modes is increased, and an adjustable range of a device mode is increased.

In some scenarios, if the electronic device detects, when starting to refresh and display the N^{th} frame of image, the first refresh rate switching instruction for switching from the second refresh rate in the hand touch mode to the first refresh rate in the pen touch mode, the electronic device may alternatively start to respond to the first refresh rate switching instruction in the refresh and display process of the (N+1)^{th} frame of image, that is, first complete switching from the second refresh rate in the hand touch mode to the first refresh rate in the hand touch mode in the refresh and display process of the (N+1)^{th} frame of image, and then complete switching from the first refresh rate in the hand touch mode to the first refresh rate in the pen touch mode in the refresh and display process of the (N+2)^{th} frame of image.

It may be understood that, in the foregoing embodiment, switching from the second refresh rate in the hand touch mode to the first refresh rate in the pen touch mode is used as an example to describe different refresh rate switching methods in different touch modes. A similar principle may also be used to implement switching from the first refresh rate in the pen touch mode to the second refresh rate in the hand touch mode.

Some refresh rate levels (for example, 144 Hz) supported in the hand touch mode cannot be supported in the pen touch mode. Therefore, if a frame rate level in the pen touch mode is adjusted first, the two touch modes may not be adjusted to a same frame rate level. For example, when the 60 Hz level in the pen touch mode is switched to the 144 Hz level in the hand touch mode, the 60 level in the pen touch mode cannot be switched to the 144 Hz level in the pen touch mode by adjusting the frame rate level first, because the pen touch mode does not support 144 Hz. As a result, switching between different touch modes cannot be implemented based on the same frame rate level. Therefore, in this embodiment of this application, in a scenario in which the first refresh rate in the pen touch mode is switched to the second refresh rate in the hand touch mode, the electronic device may first complete switching between the touch modes, and then complete switching between the frame rate levels.

For example, the electronic device detects a second refresh rate switching instruction when starting to refresh and display the N^{th} frame of image. The second refresh rate switching instruction indicates to switch from the first refresh rate in the pen touch mode to the second refresh rate in the hand touch mode. The second refresh rate is different from the first refresh rate. In response to the second refresh rate switching instruction, the electronic device may perform layer composition of the N^{th} frame of image through the GPU, to obtain a to-be-displayed first image. The screen refresh rate of the display is switched from the first refresh rate in the pen touch mode to the first refresh rate in the hand touch mode through the MDP. In this way, the electronic device displays the first image at the first refresh rate in the hand touch mode. Then, when starting to refresh and display the (N+1)^{th} frame of image, the electronic device continues to respond to the second refresh rate switching instruction. The electronic device performs layer composition of the (N+1)^{th} frame of image through the MDP, to obtain a to-be-displayed second image, and switches the screen refresh rate of the display from the first refresh rate in the hand touch mode to the second refresh rate in the hand touch mode through the MDP. In this way, the electronic device displays the first image at the second refresh rate in the hand touch mode.

In an example, the 60 Hz level in the pen touch mode is switched to the 144 Hz level in the hand touch mode. The electronic device may first complete switching from the 60 Hz level in the pen touch mode to the 60 Hz level in the hand touch mode, namely, switching between different touch modes of a same frame rate level. Then, switching from the 60 Hz level in the hand touch mode to the 144 Hz level in the hand touch mode, namely, switching between different frame rate levels in a same touch mode, is completed.

It may be understood that, it can be learned from Table 1 that, when the electronic device switches from a refresh rate of 60 Hz in the pen touch mode to a refresh rate of 60 Hz in the hand touch mode, a difference between display timings at the two refresh rates is large, and the MDP needs to spend much time in completing switching and adjustment of the display timing. However, the end-of-frame idle time in the pen touch mode is excessively short. Consequently, if the MDP still performs layer composition of an image frame, the MDP load is excessively high, resulting in a sending-for-display exception of the image frame. Therefore, in this embodiment of this application, in the refresh and display process of the N^{th} frame of image, the electronic device may refer to the refresh rate switching method in the foregoing embodiment, and assign the graphics processing unit GPU to perform layer composition, to reduce the MDP load. In this case, the MDP needs only to implement switching between the touch modes at the same frame rate level. In this way, even if end-of-frame idle time of a current refresh rate is insufficient, normal sending-for-display of the Nl^{th} frame of image and normal switching of the refresh rate can be ensured.

Optionally, when the electronic device starts to refresh and display the N^{th} frame of image, the SurfaceFlinger may obtain all layers of the N^{th} frame of image and the second refresh rate switching instruction, provide data of all the layers and the second refresh rate switching instruction for the HWC, and ask the HWC for a processing manner. Because switching between different touch modes at a same frame rate needs to be performed first, the HWC may forcibly set, according to the second refresh rate switching instruction, layer composition manners marked for all the layers of the N^{th} frame of image to GPU composition, so that the GPU can compose and overlay all the layers of the N^{th} frame of image, to finally form one frame of to-be-displayed image that is to be transmitted to the display, namely, the first image.

In addition, the electronic device may control switching of a display timing through the MDP, and switch the screen refresh rate of the display from the first refresh rate in the pen touch mode to the first refresh rate in the hand touch mode by changing a display timing parameter. In this way, after controlling switching of the display timing through the MDP, the electronic device may transmit, to the display for display based on a switched display timing corresponding to the first refresh rate in the hand touch mode, data of the to-be-displayed first image formed after GPU composition of the N^{th} frame of image.

After switching between different touch modes at the same frame rate and refresh and display of the N^{th} frame of image are completed, the electronic device may complete switching from the 60 Hz level in the hand touch mode to the 144 Hz level in the hand touch mode when starting to refresh and display the (N+1)^{th} frame of image.

It may be understood that, because switching between different refresh rates in a same touch mode is performed, according to a current refresh rate switching method, a refresh rate may be changed only by changing a VFP parameter, namely, a length of end-of-frame idle time, in a display timing, and no display exception occurs. Therefore, a layer composition manner of the (N+1)^{th} frame of image may still be performing by the MDP. In addition, the end-of-frame idle time in the hand touch mode is sufficient for the MDP to implement refresh rate switching and layer composition. In this way, when starting to refresh and display the (N+1)^{th} frame of image, the electronic device does not need to change the layer composition manner of the (N+1)^{th} frame of image.

Optionally, when the electronic device starts to refresh and display the (N+1)^{th} frame of image, the SurfaceFlinger may obtain all layers of the (N+1)^{th} frame of image and the second refresh rate switching instruction, provide data of all the layers and the second refresh rate switching instruction for the HWC, and ask the HWC for a processing manner. Because only switching between different refresh rates in a same touch mode needs to be continued, the MDP may implement refresh rate switching and layer composition at the same time. Therefore, the HWC may maintain an original layer composition manner, for example, MDP composition, of the (N+1)^{th} frame of image according to the second refresh rate switching instruction, so that the MDP may compose and overlay all the layers of the (N+1)^{th} frame of image, and finally form one frame of to-be-displayed image to be transmitted to the display, namely, the second image.

In addition, the electronic device may control switching of a display timing through the MDP, and switch the screen refresh rate of the display from the first refresh rate in the hand touch mode to the second refresh rate in the hand touch mode by changing a display timing parameter. In this way, after controlling switching of the display timing through the MDP, the electronic device may transmit, to the display for display based on a switched display timing corresponding to the second refresh rate in the hand touch mode, data of the to-be-displayed second image formed after MDP composition of the (N+1)^{th} frame of image.

In this embodiment of this application, the electronic device may determine, based on a current use scenario of the stylus, whether to switch the current screen refresh rate to a refresh rate that matches the stylus.

In some embodiments, the electronic device can identify, based on a connection status, an attachment status, and a full battery level status of the stylus, whether the stylus is currently in a used state, so that the electronic device can determine, based on a current use status of the stylus and the current screen refresh rate, a screen refresh rate level suitable for a current touch scenario, and generate a corresponding refresh rate switching instruction. In this way, the electronic device responds to the refresh rate switching instruction, completes switching to a corresponding refresh rate, and ensures that there is no exception during switching.

Refer to FIG. 17. An embodiment of this application provides another refresh rate switching method. The method may include the following steps.

S1710: The electronic device detects status information of a stylus, where the status information includes a connection status, an attachment status, and a full battery level status of the stylus.

In this embodiment of this application, the electronic device may determine, with reference to the status information such as the connection status, the attachment status, and the full battery level status of the stylus, whether the stylus is in a used state. In this way, when it is identified that the stylus is in the used state, a screen refresh rate can be switched to a refresh rate that adapts to the stylus, thereby ensuring normal use of the stylus.

The connection status of the stylus includes a connection and a disconnection. Generally, when the stylus is not in a communication connection state with the electronic device, a user cannot use the stylus. When needing to use the stylus, the user generally enables the stylus to be in the communication connection state with the electronic device. Therefore, detecting the connection status of the stylus can help the electronic device analyze whether the stylus is currently being used.

A communication connection between the stylus and the electronic device may be implemented in a wired manner (for example, a USB data cable), or may be implemented in a wireless manner (for example, Bluetooth or Wi-Fi). For example, the stylus establishes the communication connection to the electronic device in the Bluetooth manner. The electronic device may detect whether the electronic device is in a Bluetooth connection state with the stylus.

Optionally, the electronic device may detect a connection event and a disconnection event of the stylus through a Bluetooth service module at a framework layer. When the electronic device establishes the Bluetooth connection to the stylus through a Bluetooth module, the Bluetooth module of the electronic device may report the connection event to the Bluetooth service module. When the electronic device does not establish the Bluetooth connection to the stylus or disconnects the Bluetooth connection from the stylus, the Bluetooth module of the electronic device may report the disconnection event to the Bluetooth service module.

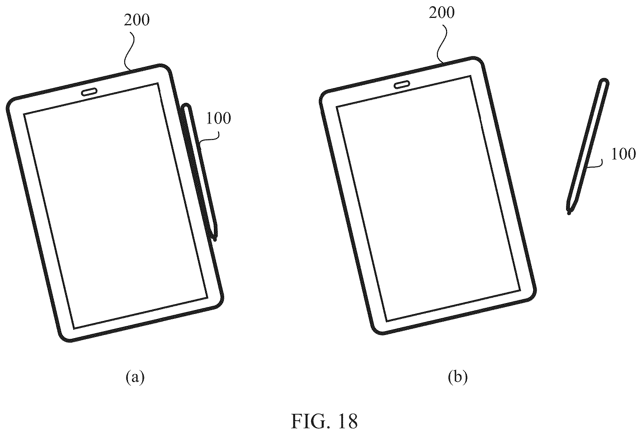

The attachment status of the stylus includes attachment and detachment (non-attachment). Generally, when the electronic device is in the communication connection to the stylus, after using the stylus for a period of time, the user may alternatively place the stylus close to the electronic device, to attach the stylus to a frame or a touchscreen of the electronic device through "strong magnetic attachment", thereby implementing wireless charging of the stylus by the electronic device when ensuring accommodation safety of the stylus. As shown in (a) in FIG. 18, the stylus 100 is attached to a right frame of the electronic device 200. It may be understood that, when the user normally uses the stylus, the stylus is generally detached from the electronic device and is not attached to the electronic device. As shown in (b) in FIG. 18, the stylus 100 is detached from the electronic device 200 and is not attached to the electronic device 200. Therefore, detecting the attachment status of the stylus can help the electronic device analyze whether the stylus is currently being used.

The full battery level status of the stylus includes a full battery level and a non-full battery level. It may be understood that, when the stylus is attached to the electronic device, if a battery level of the stylus is not full, the electronic device may continuously perform wireless charging on the stylus (that is, the stylus is in a charging state in this case) until the stylus is fully charged. If the battery level of the stylus is full, the electronic device may stop performing wireless charging on the stylus (that is, the stylus is in a charging stop state in this case). Therefore, the full battery level status of the stylus may alternatively include charging and charging stop.

Currently, the electronic device can identify the attachment event and the detachment event of the stylus during attachment charging stop in time through Q scanning. However, the detachment event during attachment charging is identified by identifying a timeout error packet (cep_timeout). However, there is a delay (for example, 1.5s) in detection of cep_timeout. Therefore, the electronic device cannot immediately detect the detachment event of the stylus during attachment charging. Consequently, when the user removes the stylus from the electronic device and immediately uses the stylus, because the electronic device cannot identify the use status of the stylus in time, the electronic device cannot switch in time the screen refresh rate to the refresh rate that matches the stylus, resulting in a touch exception, and affecting user experience of the stylus.

To resolve the foregoing problem, in this embodiment of this application, detection of the full battery level status of the stylus is added, to assist in analyzing, through the full battery level status, whether the stylus is currently being used. Optionally, the electronic device may detect the attachment event, the detachment event, a full battery level event, a non-full battery level event, or the like of the stylus through a stylus service module at a framework layer.

In a scenario, when the stylus performs an attachment action on the electronic device from a detachment state, a wireless charging chip of the electronic device detects that a Q value of a wireless charging coil changes. In this case, the wireless charging chip may generate an interrupt (Interrupt) signal, to notify a wireless charging driver through an interrupt procedure of a chip driver, and the wireless charging driver reports the attachment event to a stylus service. After the stylus is attached to the electronic device, if the battery level of the stylus is not full, the stylus is in an attachment charging state.

In a scenario, after the stylus is attached to the electronic device and is fully charged, the stylus is in an attachment charging stop state. In this case, the stylus may notify a wireless charging coil of the electronic device of a charge done (charge done) event through a Qi protocol of the wireless charging coil. After the wireless charging coil of the electronic device receives the charge done event, a wireless charging chip of the electronic device may generate an interrupt (Interrupt) signal, to notify a wireless charging driver through an interrupt procedure of a chip driver, and the wireless charging driver reports the charge done event to a stylus service.

In a scenario, if a stylus service does not receive the full battery level event when receiving the attachment event of the stylus, it may be determined that the full battery level status of the stylus is the non-full battery level, that is, the stylus is in an attachment charging state.

Optionally, if a wireless charging driver does not detect a charge done event when reporting the attachment event, the wireless charging driver may also upload the non-full battery level event to the stylus service.

In a scenario, when the stylus performs a detachment action from an attachment charging stop state, a wireless charging chip of the electronic device also detects that a Q value of a wireless charging coil changes. In this case, the wireless charging chip may generate an interrupt (Interrupt) signal, to notify a wireless charging driver through an interrupt procedure of a chip driver, and the wireless charging driver reports the detachment event during attachment charging stop to a stylus service.

S1720: The electronic device determines a current touch scenario based on the status information of the stylus.

In some embodiments, the electronic device may determine the current touch scenario based on the connection status and the attachment status of the stylus. A touch scenario includes a stylus input touch scenario (which may also be referred to as a pen control scenario, a writing scenario, or the like) and a finger input touch scenario (which may also be referred to as a hand control scenario).

For example, the stylus establishes the communication connection to the electronic device in the Bluetooth manner. The electronic device may identify the current touch scenario based on a correspondence in Table 4.

**Table 4**

| Number | Bluetooth connection status | Attachment status | Corresponding touch scenario |
|---|---|---|---|
| a | Disconnection | Attachment | Finger input scenario |
| b | Disconnection | Detachment | Finger input scenario |
| c | Connection | Attachment | Finger input scenario |
| d | Connection | Detachment (non-attachment) | Stylus input scenario |

It may be understood that, when the stylus performs the detachment or attachment action, and the electronic device can immediately detect the detachment event and the attachment event of the stylus, the electronic device may directly determine the current touch scenario based on the connection status and the attachment status of the stylus.

When the user uses the stylus, the stylus is in a connection state and a non-attachment state. Therefore, when the electronic device detects that the stylus is in a disconnection state, the electronic device may also determine that the stylus is currently not in the used state, and the current touch scenario is the finger input touch scenario (namely, touch scenarios corresponding to the number a and the number b). When the electronic device detects that the stylus is in the connection state but the stylus is in an attachment state, the electronic device may also determine that the stylus is currently not in the used state, and the current touch scenario is the finger input touch scenario (namely, the touch scenario corresponding to the number c). When the electronic device detects that the stylus is in the connection state and the stylus is in the detachment state, the electronic device may determine that the stylus is currently in the used state, and the current touch scenario is the stylus input touch scenario (namely, the touch scenario corresponding to the number d).

In some embodiments, if the electronic device identifies the detachment event of the stylus through cep_timeout, the electronic device cannot immediately detect the detachment event of the stylus. In this case, the electronic device may determine the current touch scenario based on the connection status, the attachment status, and the full battery level status of the stylus.

For example, the stylus establishes the communication connection to the electronic device in the Bluetooth manner. The electronic device may identify the current touch scenario based on a correspondence in Table 5.

**Table 5**

| Number | Bluetooth connection status | Attachment status | Full battery level status | Corresponding touch scenario |
|---|---|---|---|---|
| a1 | Disconnection | Attachment | Non-full battery level (charging) | Finger input scenario |
| a2 | | | Full battery level (charging stop) | Finger input scenario |
| b | Disconnection | Detachment | Full battery level (charging stop) | Finger input scenario |
| c1 | Connection | Attachment | Non-full battery level (charging) | Stylus input scenario |
| c2 | | | Full battery level (charging stop) | Finger input scenario |
| d | Connection | Detachment (non-attachment) | Full battery level (charging stop) | Stylus input scenario |

It may be understood that, when the stylus is in the connection state, because the stylus is attached to the electronic device and is fully charged, the stylus is in the attachment charging stop state. The wireless charging chip is always in a low power (lowpower) Q scanning mode after charging stop. Therefore, when the stylus performs the detachment action from the attachment charging stop state, the wireless charging chip may detect in time that the Q value of the wireless charging coil changes, thereby reporting the detachment event in time. In this way, when detecting the detachment event, the electronic device may determine that the stylus is currently in the used state, and the current touch scenario is the stylus input touch scenario (namely, a touch scenario corresponding to the number d). If no detachment event is detected, and the stylus is currently still in the attachment charging stop state, the electronic device may determine that the stylus is currently in an unused state, and the current touch scenario is the finger input touch scenario (namely, a touch scenario corresponding to the number c2).

In a scenario in which the stylus is attached to the electronic device and is not fully charged, because the detachment event of the stylus cannot be detected in time, in this embodiment of this application, it may be forcibly considered that the stylus is currently in the used state, and the current touch scenario is the stylus input touch scenario (namely, a touch scenario corresponding to the number c1). In this way, when the user removes the stylus from the electronic device and immediately uses the stylus, because the electronic device has switched, in advance based on the use status of the stylus, the screen refresh rate to the refresh rate that matches the stylus, no touch exception occurs, and the user can normally use the stylus for writing or touch.

When the electronic device detects that the stylus is in the disconnection state, the electronic device may directly determine that the stylus is currently not in the used state, and the current touch scenario is the finger input touch scenario (namely, touch scenarios corresponding to the number a1, the number a2, and the number b).

In a scenario, when detecting the connection event and the disconnection event, the Bluetooth service module at the framework layer may report the connection event and the disconnection event to the stylus service module at the framework layer, so that the stylus service module may determine, based on the connection event and the disconnection event reported by the Bluetooth service module and the attachment event, the detachment event, the full battery level event, and the like reported by the wireless charging driver, whether the stylus is currently in the used state.

Optionally, when receiving the disconnection event, the stylus service module considers that the stylus is currently not connected to the electronic device, and may determine that the current touch scenario is the finger input touch scenario. If the connection event is received, the stylus service module may detect whether the attachment event is received. If the stylus service module does not receive the attachment event, the stylus service module may consider that the stylus is currently in the non-attachment state (is detached from the electronic device), and may determine that the current touch scenario is the stylus input touch scenario.

Optionally, when receiving the attachment event, the stylus service module may determine whether the full battery level event is received. If the stylus service module does not receive the full battery level event, the stylus service module may consider that the stylus is currently in a connection, attachment, and non-full battery level state, and may forcibly determine that the current touch scenario is the stylus input touch scenario.

Optionally, when receiving the full battery level event, the stylus service module may determine whether the detachment event is received. If the stylus service module does not receive the detachment event, the stylus service module may consider that the stylus is currently in a connection, attachment, and full battery level state, and may determine that the current touch scenario is the finger input touch scenario. If the detachment event is received, it may be considered that the stylus is currently in the non-attachment state (is detached from the electronic device), and it may be determined that the current touch scenario is the stylus input touch scenario.

In other words, when identifying that the stylus is in the connection, attachment, and non-full battery level state, a connection and non-attachment (namely, connection and detachment) state, or the like, the stylus service module determines that the current touch scenario is the stylus input touch scenario. When it is identified that the stylus is in the connection, attachment, and full battery level state, the disconnection state, or the like, it is determined that the current touch scenario is the finger input touch scenario.

In some embodiments, the electronic device may also receive indication information that is from the stylus and that indicates whether the stylus is in the used state. Optionally, when identifying that the stylus is in the used state, the stylus may directly send first indication information to the electronic device, so that the electronic device may directly determine that the current touch scenario is the stylus input touch scenario. Optionally, when identifying that the stylus is not in the used state, the stylus may directly send second indication information to the electronic device, so that the electronic device may directly determine that the current touch scenario is the finger input touch scenario.

Optionally, the stylus may determine, by detecting a holding status, a motion status, and the like of the stylus, whether the stylus is in the used state.

S1730: The electronic device matches a corresponding target refresh rate based on the current touch scenario.

In this embodiment of this application, after determining the current touch scenario, the electronic device may determine the target refresh rate that adapts to the current touch scenario. In this way, when a current screen refresh rate is different from the target screen refresh rate, the screen refresh rate is switched.

In some embodiments, the electronic device may determine a corresponding touch mode based on the current touch scenario, to match the corresponding target refresh rate based on a refresh rate level supported in the corresponding touch mode. A touch mode includes a pen touch mode and a hand touch mode.

In some embodiments, different touch modes may also respectively correspond to firmware operating modes of a touchscreen. Therefore, after determining the corresponding touch mode based on the current touch scenario, the electronic device may also match a firmware operating mode supported in the corresponding touch mode.

For example, it is assumed that a default initial touch scenario of the electronic device is the finger input touch scenario.

If the stylus does not establish the Bluetooth connection to the electronic device, after the event is reported to the Bluetooth service module and the stylus service module through an event transmission path, the stylus service module may receive the disconnection event, and determine that the current touch scenario is still the finger input touch scenario. The touch scenario does not change (a finger input->a finger input).

In a scenario, if the stylus has established the Bluetooth connection to the electronic device, and the stylus is in the detachment state, after the events are reported to the stylus service module through a same path, the stylus service module may receive the connection event and the detachment event, and determine that the current touch scenario is the stylus input touch scenario. The touch scenario has changed (the finger input->a stylus input). Certainly, if the Bluetooth connection of the stylus is disconnected in this case, the stylus service module may receive the disconnection event, and therefore may determine that the current touch scenario is restored to the finger input touch scenario. The touch scenario changes again (the stylus input->the finger input).

Then, if the stylus performs an attachment operation from the detachment state when the Bluetooth connection is not disconnected, after the events are reported to the stylus service module through the same path, the stylus service module may receive the connection event and the attachment event. If the stylus service module does not receive the full battery level event, it indicates that the stylus is attached to the electronic device and is in the charging state. In this case, the stylus service module determines that the current touch scenario is still the stylus input touch scenario. The touch scenario does not change (the stylus input->the stylus input). Certainly, if the Bluetooth connection of the stylus is disconnected in this case, the stylus service module may receive the disconnection event, and therefore may determine that the current touch scenario is the finger input touch scenario. The touch scenario has changed (the stylus input->the finger input).

Then, if the stylus is attached to the electronic device for a period of time when the Bluetooth connection is not disconnected, and the stylus service module receives the full battery level event, it indicates that the stylus is in the attachment charging stop state. In this case, the stylus service module determines that the current touch scenario is the finger input touch scenario. The touch scenario has changed (the stylus input->the finger input). Certainly, if the Bluetooth connection of the stylus is disconnected in this case, the stylus service module may receive the disconnection event, and therefore may determine that the current touch scenario is still the finger input touch scenario. The touch scenario does not change (the finger input->the finger input).

Then, if the stylus performs a detachment operation from the attachment charging stop state when the Bluetooth connection is not disconnected, after the events are reported to the stylus service module through the same path, the stylus service module may receive the connection event and the detachment event. The stylus service module determines that the current touch scenario is the stylus input touch scenario. The touch scenario has changed (the finger input->the stylus input). Certainly, if the Bluetooth connection of the stylus is disconnected in this case, the stylus service module may receive the disconnection event, and therefore may determine that the current touch scenario is the finger input touch scenario. The touch scenario has changed (the stylus input->the finger input).

It may be understood that, if the stylus performs the detachment operation from the attachment charging state when the Bluetooth connection is not disconnected, the stylus service module can receive only the connection event and the attachment event, and cannot receive the detachment (a cep_timeout delay) in time. Therefore, the stylus service module still retains an original touch scenario identification result, namely, the forcibly determined stylus input touch scenario. This is exactly consistent with a touch scenario corresponding to the connection event and the detachment event. Therefore, no touch scenario identification error occurs. Even if the stylus service module subsequently receives the detachment event after the cep_timeout delay, an identified touch scenario is still the stylus input touch scenario. Therefore, no touch scenario identification error occurs either.

In another scenario, if the stylus has established the Bluetooth connection to the electronic device, and the stylus is in the attachment charging state, after the events are reported to the stylus service module through the same path, the stylus service module may receive the connection event and the attachment event, and does not receive the full battery level event. It indicates that the stylus is in a non-full battery level state. In this case, the stylus service module may forcibly determine that the current touch scenario is the stylus input touch scenario. The touch scenario has changed (the finger input->the stylus input). Certainly, if the Bluetooth connection of the stylus is disconnected in this case, the stylus service module may receive the disconnection event, and therefore may determine that the current touch scenario is restored to the finger input touch scenario. The touch scenario changes again (the stylus input->the finger input).

Then, if the stylus is attached to the electronic device for a period of time when the Bluetooth connection is not disconnected, and the stylus service module receives the full battery level event, it indicates that the stylus is in the attachment charging stop state. In this case, the stylus service module may determine that the current touch scenario is the finger input touch scenario. The touch scenario has changed (the stylus input->the finger input). For subsequent scenarios such as a disconnection and detachment, refer to the foregoing descriptions.

In another scenario, if the stylus has established the Bluetooth connection to the electronic device, and the stylus is in the attachment charging stop state, after the events are reported to the stylus service module through the same path, the stylus service module may receive the connection event, the attachment event, and the full battery level event. It indicates that the stylus is in a full battery level state. In this case, the stylus service module may determine that the current touch scenario is still the finger input touch scenario. The touch scenario does not change (the finger input->the finger input). Certainly, if the Bluetooth connection of the stylus is disconnected in this case, the stylus service module may receive the disconnection event, and therefore may determine that the current touch scenario is still the finger input touch scenario. The touch scenario does not change (the finger input->the finger input).

Then, if the stylus performs the detachment operation from the attachment charging stop state when the Bluetooth connection is not disconnected, after the events are reported to the stylus service module through the same path, the stylus service module may receive the connection event and the detachment event. The stylus service module determines that the current touch scenario is the stylus input touch scenario. The touch scenario has changed (the finger input->the stylus input). Certainly, if the Bluetooth connection of the stylus is disconnected in this case, the stylus service module may receive the disconnection event, and therefore may determine that the current touch scenario is the finger input touch scenario. The touch scenario has changed (the stylus input->the finger input).

In an example, identification of the touch scenario and whether the touch scenario changes may be shown in Table 6.

**Table 6**

| Previous stylus status | | | Previous touch scenario | Current stylus status | | | Current touch scenario | Whether the scenario changes |
|---|---|---|---|---|---|---|---|---|
| Disconnection | / | / | Finger input | Connection | Detachment | / | Stylus input | Yes |
| | | | | | Attachment | Non-full battery level | Stylus input | Yes |
| | | | | | | Full battery level | Finger input | No |
| | | | | | | | | |
| Connection | Detachment | / | Stylus input | Disconnection | / | / | Finger input | Yes |
| | | | | Connection | Attachment | Non-full battery level | Stylus input | No |
| | | | | | | Full battery level | Finger input | Yes |
| | | | | | | | | |
| Connection | Attachment | Non-full battery level | Stylus input | Disconnection | | | Finger input | Yes |
| | | | | Connection | Attachment | Full battery level | Finger input | Yes |
| | | | | | | | | |
| Connection | Attachment | Full battery level | Finger input | Disconnection | / | / | Finger input | No |
| | | | | Connection | Detachment | / | Stylus input | Yes |

In some embodiments, when determining the current touch scenario, if the stylus service module of the electronic device finds that the touch scenario has changed compared with a previous touch scenario, the stylus service module may notify the frame rate control module, so that the frame rate control module matches the corresponding target refresh rate based on the current touch scenario. In this way, a screen refresh rate suitable for the current touch scenario of the electronic device is determined in real time. That is, switching between refresh rates in different touch modes is related.

In an example, the stylus service module sends a scenario switching instruction to the frame rate control module, so that the frame rate control module may respond to the scenario switching instruction, and determine the screen refresh rate suitable for the current touch scenario of the electronic device.

Optionally, when the current touch scenario is the stylus input touch scenario, the frame rate control module may determine, based on the stylus input touch scenario, that a corresponding touch mode is the pen touch mode. In this way, the frame rate control module may match the corresponding target refresh rate from a screen refresh rate level supported in the pen touch mode. For example, as shown in Table 3, the target refresh rate may be 60 Hz (namely, the sequence number 2-2) in the pen touch mode.

In some embodiments, when the current touch scenario is the stylus input touch scenario, the frame rate control module may also match a corresponding target operating mode from a touchscreen firmware operating mode supported in the pen touch mode. For example, as shown in Table 3, the target operating mode may be the firmware mode 2 in the pen touch mode.

Optionally, when the current touch scenario is the finger input touch scenario, the frame rate control module may determine, based on the finger input touch scenario, that a corresponding touch mode is the hand touch mode. In this way, the frame rate control module may match the corresponding target refresh rate from a screen refresh rate level supported in the hand touch mode. For example, as shown in Table 3, the target refresh rate may be 144 Hz (namely, the sequence number 1-4) in the hand touch mode.

In some embodiments, when the current touch scenario is the finger input touch scenario, the frame rate control module may also match a corresponding target operating mode from a touchscreen firmware operating mode supported in the hand touch mode. For example, as shown in Table 3, the target operating mode may be the firmware mode 1 in the hand touch mode.

In some embodiments, when determining the current touch scenario, if the stylus service module of the electronic device finds that the touch scenario does not change compared with a previous touch scenario, the stylus service module may alternatively not notify the frame rate control module. In this way, the frame rate control module continues to match the corresponding target refresh rate based on the previous touch scenario. That is, only an adjustment change of a frame rate level in a same touch mode is related.

In this embodiment of this application, refresh rate levels supported in different touch modes may have an overlapping part, or may have a different part. For example, the hand touch mode supports refresh rate levels such as 30 Hz, 60 Hz, 120 Hz, and 144 Hz, and further supports another refresh rate (for example, 62 Hz or 125 Hz) between these refresh rate levels. However, the pen touch mode can support only three frame rates: 30 Hz, 60 Hz, and 120 Hz. In this way, a frame rate range and a level that are supported in the hand touch mode are added, power consumption in the hand touch mode can also be reduced, and an anti-interference capability can also be enhanced.

Optionally, the frame rate control module may match the corresponding target refresh rate based on the current touch scenario and a refresh rate currently used for a screen.

For example, the refresh rate currently used for the screen is 144 Hz (namely, the sequence number 1-4) in the hand touch mode. If it is identified that the current touch scenario is the stylus input touch scenario, the frame rate control module may determine, based on the stylus input touch scenario, that the corresponding touch mode is the pen touch mode. In this way, the frame rate control module may select, as the matched corresponding target refresh rate from the screen refresh rate level supported in the pen touch mode, a refresh rate level closest to the refresh rate currently used for the screen. For example, as shown in Table 3, the target refresh rate may be 60 Hz (namely, the sequence number 2-2) in the pen touch mode. This avoids an excessively large difference in switching between refresh rate levels.

It may be understood that, when the target refresh rate is 60 Hz in the pen touch mode, in a refresh rate switching process performed by the electronic device, switching between different touch modes needs to be performed, and switching between different frame rate levels needs also to be performed.

For another example, the refresh rate currently used for the screen is 60 Hz (namely, the sequence number 2-2) in the pen touch mode. If it is identified that the current touch scenario is the finger input touch scenario, the frame rate control module may determine, based on the finger input touch scenario, that the corresponding touch mode is the hand touch mode. In this way, the frame rate control module may select, as the matched corresponding target refresh rate from the screen refresh rate level supported in the hand touch mode, a refresh rate level closest to the refresh rate currently used for the screen. For example, as shown in Table 3, the target refresh rate may be 60 Hz (namely, the sequence number 1-2) in the hand touch mode. This avoids an excessively large difference in switching between refresh rate levels.

It may be understood that, when the target refresh rate is 60 Hz in the hand touch mode, because the refresh rate levels are the same and are both 60 Hz, in a refresh rate switching process performed by the electronic device, only switching between different touch modes needs to be performed.

S1740: The electronic device adjusts the screen refresh rate to the target refresh rate.

In some embodiments, when determining the target refresh rate, the frame rate control module may generate a refresh rate switching instruction, and send the refresh rate switching instruction to an instruction delivery module, to deliver the refresh rate switching instruction to a display driver at a kernel layer, to complete refresh rate switching.

Optionally, when the touch scenario changes, the target refresh rate determined by the frame rate control module and the refresh rate currently used for the screen are refresh rates in different touch modes. Therefore, the generated refresh rate switching instruction relates to switching between touch modes. For example, the refresh rate currently used for the screen is a second refresh rate in the hand touch mode, and the target refresh rate is a first refresh rate in the pen touch mode. The generated refresh rate switching instruction may be the first refresh rate switching instruction in the foregoing embodiment. In this case, the electronic device may perform the refresh rate switching manner in the foregoing embodiment, to complete switching between refresh rates in different touch modes.

Optionally, when the generated refresh rate switching instruction relates to switching between the touch modes, and also relates to switching between frame rate levels, if the refresh rate currently used for the screen exceeds a refresh rate level supported in a switched touch mode, the electronic device may first adjust the refresh rate currently used for the screen to a refresh rate range that can be supported in the switched touch mode, and then trigger switching between the touch modes. For example, when the refresh rate currently used for the screen is 120 Hz in the hand touch mode, if 60 Hz in the pen touch mode is to be switched to, the frame rate level is first reduced to 60 Hz in the hand touch mode. Then, 60 Hz in the hand touch mode is switched to 60 Hz in the pen touch mode.

Optionally, when the touch scenario does not change, the target refresh rate determined by the frame rate control module and the refresh rate currently used for the screen are refresh rates in a same touch mode. Therefore, the generated refresh rate switching instruction relates only to switching between refresh rate levels. The refresh rate may be changed by directly changing a VFP parameter in a display timing, namely, a length of end-of- frame idle time.

In some embodiments, if switching between refresh rates in different touch modes is related, when determining the target refresh rate, the frame rate control module may also generate a firmware switching instruction, and deliver the firmware switching instruction to a touch driver at the kernel layer, to complete switching of an operating mode of touch firmware. Optionally, the firmware switching instruction may alternatively be sent to the instruction delivery module, to deliver the firmware switching instruction to the display driver at the kernel layer, indicating the display driver to complete refresh rate switching and synchronously notify at the kernel layer the touch driver to complete switching of the operating mode of the touch firmware.

In this embodiment of this application, the electronic device may also preconfigure a corresponding touch mode for some applications. In this way, when running an application in these applications in a foreground, the electronic device may directly match, based on a configured touch mode corresponding to the application, a target refresh rate in the corresponding touch mode.

In some embodiments, the electronic device may also match the corresponding target refresh rate based on a touch mode configured in a trustlist. Optionally, the electronic device may store an application trustlist corresponding to the hand touch mode and an application trustlist corresponding to the pen touch mode. Each application in the application trustlist corresponding to the hand touch mode is forcibly configured to be in the hand touch mode. Each application in the application trustlist corresponding to the pen touch mode is forcibly configured to be in the pen touch mode.

When the application run on the electronic device in the foreground is a first application, if the application trustlist corresponding to the hand touch mode includes the first application, the electronic device may determine that a touch mode corresponding to a current scenario is the hand touch mode. In this way, the electronic device may match the corresponding target refresh rate from the refresh rate level supported in the hand touch mode. The first application may be an application for which the stylus does not need to be used, for example, a game application or a video application.

When the application run on the electronic device in the foreground is a second application, if the application trustlist corresponding to the pen touch mode includes the second application, the electronic device may determine that a touch mode corresponding to a current scenario is the pen touch mode. In this way, the electronic device may match the corresponding target refresh rate from the refresh rate level supported in the pen touch mode. The second application may be an application for which the stylus needs to be used, for example, a painting application or a note-taking application.

Optionally, the application trustlist stored in the electronic device may alternatively include a preconfigured touch mode corresponding to each application, including an application corresponding to the pen touch mode and an application corresponding to the hand touch mode. In this way, the electronic device may determine, based on the application trustlist, a touch mode corresponding to the application run in the foreground.

In a scenario, a trustlist service module at the framework layer of the electronic device may determine in real time whether the corresponding touch mode is configured for the application run in the foreground in the application trustlist. If the touch mode corresponding to the application run in the foreground is configured in the application trustlist, the trustlist service module may notify the frame rate control module of the corresponding touch mode, so that the frame rate control module can match the target refresh rate in the touch mode.

Optionally, the application trustlist may notify the frame rate control module when detecting that the touch mode changes, so that the frame rate control module can match the target refresh rate in the touch mode.

In some embodiments, the electronic device may alternatively match the corresponding target refresh rate by comprehensively considering the trustlist and the use status of the stylus.

Optionally, the electronic device may preferably match the corresponding target refresh rate based on a touch mode configured in the trustlist. When a touch mode corresponding to the application run in the foreground is not configured in the application trustlist, the electronic device may determine a current touch scenario based on the use status of the stylus. In this way, a corresponding touch mode is determined based on the current touch scenario, and then the corresponding target refresh rate is matched.

In a scenario, the frame rate control module at the framework layer may preferably determine, based on the touch mode configured in the trustlist service module, a target refresh rate suitable for the current touch scenario of the electronic device. When no corresponding touch mode is configured in the trustlist service module, the target refresh rate suitable for the current touch scenario of the electronic device is determined based on the status information of the stylus sent by the stylus service module.

In this way, the electronic device can implement refresh switching between different touch modes by comprehensively considering the trustlist and the use status of the stylus.

It may be understood that, to implement the foregoing functions, the electronic device includes corresponding hardware and/or software modules for performing the functions. With reference to algorithm steps in the examples described in embodiments disclosed in this specification, this application can be implemented in a form of hardware or a combination of the hardware and computer software. Whether a function is performed by hardware or hardware driven by computer software depends on particular applications and design constraints of the technical solutions. A person skilled in the art may use different methods to implement the described functions for each specific application with reference to embodiments. However, it should not be considered that the implementation goes beyond the scope of this application.

In embodiments of this application, the electronic device may be divided into functional modules based on the foregoing methods. For example, each functional module may be obtained through division based on each corresponding function, or two or more functions may be integrated into one processing module. The integrated module may be implemented in a form of hardware. It should be noted that, in embodiments, division into the modules is an example, is merely logical function division, and may be other division during actual implementation.

Some other embodiments of this application further provide a refresh rate switching apparatus. The apparatus may be used in the foregoing electronic device. The apparatus is configured to perform functions or steps performed by the electronic device in the foregoing method embodiments.

Some other embodiments of this application further provide a refresh rate switching system. The system includes a stylus and the foregoing electronic device.

Some other embodiments of this application further provide an electronic device. The electronic device includes the foregoing stylus. The electronic device is configured to perform functions or steps performed by the electronic device in the foregoing method embodiments.

An embodiment of this application further provides a chip system. The chip system includes at least one processor and at least one interface circuit. The processor and the interface circuit may be interconnected through a line. The interface circuit may read instructions stored in a memory, and send the instructions to the processor. When the instructions are executed by the processor, an electronic device is enabled to perform the steps in the foregoing embodiments. Certainly, the chip system may further include another discrete device. This is not specifically limited in embodiments of this application.

An embodiment of this application further provides a computer storage medium. The computer storage medium includes computer instructions. When the computer instructions are run on the foregoing electronic device, the electronic device is enabled to perform the functions or steps performed by the electronic device in the foregoing method embodiments.

An embodiment of this application further provides a computer program product. When the computer program product runs on a computer, the computer is enabled to perform the functions or steps executed by the electronic device in the foregoing method embodiments.

The stylus, the electronic device, the computer storage medium, the computer program product, or the chip provided in embodiments is configured to perform a corresponding method provided above. Therefore, for beneficial effect that can be achieved by the stylus, the electronic device, the computer storage medium, the computer program product, or the chip, refer to the beneficial effect in the corresponding method provided above. Details are not described herein again.

The foregoing descriptions of the implementations allow a person skilled in the art to clearly understand that, for the purpose of convenient and brief description, division into the foregoing functional modules is only used as an example for illustration. During actual application, the foregoing functions may be allocated to different functional modules for implementation based on a requirement, that is, an inner structure of an apparatus is divided into different functional modules to implement all or some of the functions described above.

In the several embodiments provided in this application, it should be understood that the disclosed apparatus and methods may be implemented in other manners. For example, the described apparatus embodiment is merely an example. For example, division into the modules or the units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The foregoing content is merely specific implementations of this application, but is not intended to limit the protection scope of this application. Any variation or replacement within the technical scope disclosed in this application shall fall within the protection scope of this application. Therefore, the protection scope of this application shall be subject to the protection scope of the claims.

## Claims

1. A refresh rate switching method, applied to an electronic device, wherein the electronic device supports a first touch mode and a second touch mode, and the method comprises:
detecting a first refresh rate switching instruction when a screen refresh rate is a first refresh rate in the first touch mode, wherein the first refresh rate switching instruction indicates to switch from the first refresh rate in the first touch mode to a second refresh rate in the second touch mode;
in response to the first refresh rate switching instruction, controlling a graphics processing unit to perform layer composition of a to-be-displayed image;
controlling a display processor to switch the screen refresh rate from the first refresh rate in the first touch mode to the second refresh rate in the second touch mode; and
displaying, at the second refresh rate in the second touch mode, the to-be-displayed image composed by the graphics processing unit.

2. The method according to claim 1, wherein the first touch mode is a pen touch mode, and the second touch mode is a hand touch mode; or the first touch mode is the hand touch mode, and the second touch mode is the pen touch mode; and
the hand touch mode indicates that the electronic device supports a user to provide an input through a finger operation, and the pen touch mode indicates that the electronic device supports the user to provide inputs through both the finger operation and a stylus operation.

3. The method according to claim 1 or 2, wherein the first refresh rate is the same as the second refresh rate; or
the first refresh rate is greater than the second refresh rate; or
the first refresh rate is less than the second refresh rate.

4. The method according to any one of claims 1 to 3, wherein when the first refresh rate is greater than the second refresh rate, the method further comprises:
detecting the first refresh rate switching instruction when refreshing and displaying an N^{th} frame of image, wherein N is a positive integer;
in response to the first refresh rate switching instruction, controlling the display processor to perform layer composition of the N^{th} frame of image, to obtain a to-be-displayed first image;
controlling the display processor to switch the screen refresh rate from the first refresh rate in the first touch mode to the second refresh rate in the first touch mode;
displaying, at the second refresh rate in the first touch mode, the first image composed by the display processor;
when refreshing and displaying an (N+1)^{th} frame of image, in response to the first refresh rate switching instruction, controlling the graphics processing unit to perform layer composition of the (N+1)^{th} frame of image, to obtain a to-be-displayed second image;
controlling the display processor to switch the screen refresh rate from the second refresh rate in the first touch mode to the second refresh rate in the second touch mode; and
displaying, at the second refresh rate in the second touch mode, the second image composed by the graphics processing unit.

5. The method according to any one of claims 1 to 3, wherein when the first refresh rate is less than the second refresh rate, the method further comprises:
detecting the first refresh rate switching instruction when refreshing and displaying an N^{th} frame of image, wherein N is a positive integer;
in response to the first refresh rate switching instruction, controlling the graphics processing unit to perform layer composition of the N^{th} frame of image, to obtain a to-be-displayed first image;
controlling the display processor to switch the screen refresh rate from the first refresh rate in the first touch mode to the first refresh rate in the second touch mode;
displaying, at the first refresh rate in the second touch mode, the first image composed by the graphics processing unit;
when refreshing and displaying an (N+1)^{th} frame of image, in response to the first refresh rate switching instruction, controlling the display processor to perform layer composition of the (N+1)^{th} frame of image, to obtain a to-be-displayed second image;
controlling the display processor to switch the screen refresh rate from the first refresh rate in the second touch mode to the second refresh rate in the second touch mode; and
displaying, at the second refresh rate in the second touch mode, the second image composed by the display processor.

6. The method according to any one of claims 1 to 5, wherein the method further comprises:
determining a use status of a stylus; and
generating the first refresh rate switching instruction in response to switching the use status from being unused to being used or switching the use status from being used to being unused.

7. The method according to claim 6, wherein determining the use status of the stylus comprises:
receiving the use status of the stylus sent by the stylus; or
determining the use status of the stylus based on a detected connection status, attachment status, and full battery level status of the stylus.

8. The method according to claim 7, wherein determining the use status of the stylus based on the detected connection status, attachment status, and full battery level status of the stylus comprises:
if it is detected that the stylus is connected and attached to the electronic device, and a battery level of the stylus is not full, determining that the use status of the stylus is being used;
if it is detected that the stylus is connected and attached to the electronic device, and the battery level of the stylus is full, determining that the use status of the stylus is being unused;
if it is detected that the stylus is connected but not attached to the electronic device, determining that the use status of the stylus is being used; or
if it is detected that the stylus is not connected to the electronic device, determining that the use status of the stylus is being unused.

9. The method according to any one of claims 6 to 8, wherein the first touch mode is the hand touch mode, the second touch mode is the pen touch mode, and generating the first refresh rate switching instruction in response to switching the use status from being unused to being used comprises:
determining, as the second refresh rate in response to switching the use status from being unused to being used, a matched screen refresh rate from a plurality of refresh rates supported in the pen touch mode; and
generating the first refresh rate switching instruction based on the second refresh rate in the pen touch mode.

10. The method according to any one of claims 6 to 8, wherein the first touch mode is the pen touch mode, the second touch mode is the hand touch mode, and generating the first refresh rate switching instruction in response to switching the use status from being used to being unused comprises:
determining, as the second refresh rate in response to switching the use status from being used to being unused, a matched screen refresh rate from a plurality of refresh rates supported in the hand touch mode; and
generating the first refresh rate switching instruction based on the second refresh rate in the hand touch mode.

11. The method according to any one of claims 6 to 10, wherein the method further comprises:
when a foreground application is not in a preset trustlist, generating the first refresh rate switching instruction in response to switching the use status from being unused to being used or switching the use status from being used to being unused; or
matching, from the preset trustlist when the foreground application is in the preset trustlist, a touch mode corresponding to the foreground application; and
generating the first refresh rate switching instruction in response to switching the touch mode corresponding to the foreground application from the first touch mode to the second touch mode.

12. The method according to claim 11, wherein generating the first refresh rate switching instruction in response to switching the touch mode corresponding to the foreground application from the first touch mode to the second touch mode comprises:
determining, as the second refresh rate in response to switching the touch mode corresponding to the foreground application from the first touch mode to the second touch mode, a matched screen refresh rate from a plurality of refresh rates supported in the second touch mode; and
generating the first refresh rate switching instruction based on the second refresh rate in the second touch mode.

13. The method according to any one of claims 1 to 12, wherein touch firmware of the electronic device supports a first operating mode and a second operating mode, the first operating mode corresponds to the first touch mode, the second operating mode corresponds to the second touch mode, and the method further comprises:
in response to the first refresh rate switching instruction, switching an operating mode of the touch firmware from the first operating mode to the second operating mode.

14. The method according to any one of claims 1 to 13, wherein the method further comprises:
after the screen refresh rate is switched to the second refresh rate in the second touch mode, controlling the display processor to perform layer composition of the to-be-displayed image; and
displaying, at the second refresh rate in the second touch mode, the to-be-displayed image composed by the display processor.

15. An electronic device, wherein the electronic device comprises a memory and one or more processors; the memory is configured to store a program; and when the processor executes the program, the electronic device performs the method according to any one of claims 1 to 14.

16. An electronic device, wherein the electronic device comprises a stylus.

17. A readable storage medium, comprising a program, wherein when the program is run on an electronic device, the electronic device is enabled to perform the method according to any one of claims 1 to 14.
